(19) **Europäisches Patentamt**
**European Patent Office**
**Office européen des brevets**

(11) **EP 4 510 636 A1**

(12) **EUROPEAN PATENT APPLICATION**
published in accordance with Art. 153(4) EPC

(43) Date of publication:
**19.02.2025 Bulletin 2025/08**

(21) Application number: **23795242.9**

(22) Date of filing: **21.04.2023**

(51) International Patent Classification (IPC):
**H04W 4/02** (2018.01)

(52) Cooperative Patent Classification (CPC):
**H04L 5/00; H04W 4/02; H04W 64/00; H04W 72/12;
H04W 72/1263**

(86) International application number:
**PCT/CN2023/089911**

(87) International publication number:
**WO 2023/207809 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.04.2022 CN 202210450673
17.02.2023 CN 202310145060**

(71) Applicant: **Huawei Technologies Co., Ltd.
Shenzhen, Guangdong 518129 (CN)**

(72) Inventors:
• **GAO, Xin
Shenzhen, Guangdong 518129 (CN)**

• **SHANG, Shunshun
Shenzhen, Guangdong 518129 (CN)**
• **LIU, Mengting
Shenzhen, Guangdong 518129 (CN)**
• **LI, Jianfeng
Shenzhen, Guangdong 518129 (CN)**
• **LI, Cheng
Shenzhen, Guangdong 518129 (CN)**

(74) Representative: **Maiwald GmbH
Engineering
Elisenhof
Elisenstrasse 3
80335 München (DE)**

(54) **POSITIONING METHOD AND POSITIONING APPARATUS**

(57) Embodiments of this application provide a positioning method and a positioning apparatus, to improve positioning efficiency. The method includes: A first device sends SCI to a second device, where the SCI includes time-frequency resource information of a reference signal, and the reference signal is used for positioning. Correspondingly, the second device receives the SCI. The first device sends the reference signal to the second device. Correspondingly, the second device receives the reference signal, and sends a response message to the first device. The first device receives the response message sent by the second device, where the response message includes location information determined by the second device based on the reference signal.

300

```
┌──────────────┐                    ┌──────────────┐
│ First device │                    │ Second device│
└──────┬───────┘                    └───────┬──────┘
       │────────── S301: SCI ──────────────▶│
       │                                    │
       │─── S302: Reference signal ────────▶│
       │                                    │
       │◀── S303: Response message ─────────│
       │                                    │
```

FIG. 3

EP 4 510 636 A1

**Description**

This application claims priorities to Chinese Patent Application No. 202210450673.1, filed with the China National Intellectual Property Administration on April 27, 2022 and entitled "POSITIONING METHOD AND POSITIONING APPARATUS", and to Chinese Patent Application No. 202310145060.1, filed with the China National Intellectual Property Administration on February 17, 2023 and entitled "POSITIONING METHOD AND POSITIONING APPARATUS", both of which are incorporated herein by reference in their entireties.

**TECHNICAL FIELD**

This application relates to the field of wireless communication, and in particular, to a positioning method and a positioning apparatus.

**BACKGROUND**

With development of mobile communication technologies, more users hope that a mobile communication system can provide a positioning service. Especially with continuous development of a fifth generation mobile communication system, a positioning service has become one of the important services with broad prospects and attractiveness.

Currently, in a cellular network communication technology, there are a plurality of positioning methods, for example, a downlink time difference of arrival (downlink time delay of arrival, DL-TDOA), a downlink angle of departure (downlink angle of departure, DL-AOD), an uplink time difference of arrival (uplink time delay of arrival, UL-TDOA), an uplink angle of arrival (uplink angle of arrival, UL-AOA), a multi-round trip time (multi-round trip time, multi-RTT), and other positioning methods.

In sidelink (sidelink, SL) communication, how to support a positioning function has not been considered, but adding the positioning function for the SL communication is an inevitable trend. Therefore, in the SL communication, how to implement positioning becomes an urgent problem to be resolved.

**SUMMARY**

This application provides a positioning method and a positioning apparatus, to help improve positioning efficiency.

According to a first aspect, a positioning method is provided. The method includes: A first device sends sidelink control information (sidelink control information, SCI) to a second device, where the SCI includes time-frequency resource information of a reference signal, and the reference signal is used for positioning. The first device sends the reference signal to the second device. The first device receives a response message sent by the second device, where the response message includes location information determined by the second device based on the reference signal.

The first device and the second device may be different terminal devices.

The SCI may be sent by the first device in a broadcast manner, or may be sent by the first device in a unicast manner. This is not limited in this application.

The SCI may be SCI specially formulated in a protocol for positioning, or may reuse existing SCI in the protocol. This is not limited in this application.

Optionally, the SCI may further include at least one piece of the following information: a quantity of resource blocks (resource blocks, RBs) occupied by the reference signal in frequency domain, a quantity of symbols occupied by the reference signal in time domain, or a frequency domain interval.

Optionally, before the first device sends the SCI to the second device, the first device may further send a request message to the second device by using the SCI. The request message is used to request the second device to perform positioning. To be specific, the first device sends the SCI to the second device, where the SCI includes the request message; and then the first device sends the SCI to the second device, where the SCI includes the time-frequency resource information of the reference signal.

The first device may send the reference signal by using a time-frequency resource corresponding to the time-frequency resource information of the reference signal. Correspondingly, the second device may receive the reference signal on the time-frequency resource corresponding to the time-frequency resource information of the reference signal.

The second device may measure the reference signal to obtain time of arrival information, angle of arrival information, or phase of arrival information of the reference signal, then determine the location information based on the time of arrival information, the angle of arrival information, or the phase of arrival information, and send the response message to the first device. The response message includes the location information.

That the response message includes the location information determined by the second device based on the reference signal is merely an implementation. In another possible implementation, the response message may include the time of arrival information, the angle of arrival information, or the phase of arrival information of the reference signal. After receiving the time of arrival information, the angle of arrival information, or the phase of arrival information of the reference signal, the first device may determine the location information based on the time of arrival information, the angle of arrival information, or the phase of arrival information.

According to the positioning method provided in this application, when there is a positioning requirement, the first device may send, by using the SCI, the time-frequency resource information of the reference signal for positioning, send the reference signal on the time-frequency resource corresponding to the time-frequency resource information, and receive the location information fed back by the second device. There is little signaling exchange between the two devices. This greatly simplifies a positioning procedure, can improve positioning efficiency, and helps ensure validity and real-time performance of a positioning result.

With reference to the first aspect, in some implementations of the first aspect, the reference signal and the SCI are in a same slot.

The reference signal and the SCI may be located in different symbols in the same slot. In one slot, a symbol occupied by the reference signal may be adjacent to or may not be adjacent to a symbol occupied by the SCI. This is not limited in this application.

According to the positioning method provided in this application, after obtaining the SCI through parsing, the second device can quickly obtain the reference signal through parsing, so that receiving latency can be reduced, and positioning efficiency can be further improved.

With reference to the first aspect, in some implementations of the first aspect, in the slot, a 1st symbol occupied by the reference signal is a symbol following a last symbol occupied by the SCI.

With reference to the first aspect, in some implementations of the first aspect, a sequence initialization identifier of the reference signal is generated based on cyclic redundancy check (cyclic redundancy check, CRC) code of the SCI.

A method for generating the sequence initialization identifier of the reference signal based on the CRC of the SCI may be agreed on in a protocol.

After receiving the SCI, the second device may generate the sequence initialization identifier of the reference signal based on the CRC of the SCI, and perform a correlation operation on the sequence initialization identifier and the received reference signal, to obtain the time of arrival information, the angle of arrival information, or the phase of arrival information.

According to the positioning method provided in this application, the sequence initialization identifier of the reference signal may be generated based on the CRC of the SCI, so that whether the sequence initialization identifier of the received reference signal is correct can be quickly determined, a local reference signal can be quickly generated, and positioning can be quickly implemented.

With reference to the first aspect, in some implementations of the first aspect, the sequence initialization identifier

$$N_{ID} = \sum_{i=0}^{L-1} 2^i * p_i$$

of the reference signal and the CRC satisfy the following formula: , where $p_i$ is an $i^{th}$ bit of the CRC, $L$ is a length of the CRC, and $N_{ID}$ is the sequence initialization identifier.

With reference to the first aspect, in some implementations of the first aspect, the SCI further includes indication information of first duration, and the response message is received within the first duration.

The first duration is maximum duration in which the first device receives the response message. After obtaining the first duration by using the SCI, the second device sends the response message to the first device within the first duration. If the first duration is exceeded, the second device may not send the response message.

According to the positioning method provided in this application, the SCI includes the first duration for feeding back the response message, so that the second device feeds back the response message as soon as possible, and positioning can be quickly implemented.

With reference to the first aspect, in some implementations of the first aspect, the SCI further includes time-frequency resource information of the response message.

The SCI may include the time-frequency resource information of the response message. The second device may obtain the time-frequency resource information of the response message by using the SCI, and send the response message on a time-frequency resource corresponding to the time-frequency resource information of the response message. The first device may receive the response message on the time-frequency resource corresponding to the time-frequency resource information of the response message. This reduces a process of obtaining a resource or sensing a resource, and helps improve positioning efficiency.

With reference to the first aspect, in some implementations of the first aspect, the SCI further includes a quantity n of to-be-sent reference signals, where n is a positive integer. That the first device sends the reference signal to the second device includes: The first device sends the n reference signals to the second device, where the n reference signals include the reference signal.

According to the positioning method provided in this application, a plurality of reference signals are sent. A real-time location can be obtained, improving time validity. In addition, the second device can be prevented from missing a reference signal, improving positioning reliability.

With reference to the first aspect, in some implementations of the first aspect, the SCI further includes time-frequency resource information of the n reference signals and/or a sending interval between the n reference signals.

In a possible implementation, the SCI may further include the time-frequency resource information of the n reference signals.

The SCI may include the time-frequency resource information of the n reference signals. The second device may obtain the time-frequency resource information of the n reference signals by using the SCI, and receive the reference signals on time-frequency resources corresponding to the time-frequency resource information of the n reference signals.

In this manner, the n reference signals may be sent on different time-frequency resources.

In another possible implementation, the SCI may further include the sending interval between the n reference signals.

The SCI may include the sending interval between the n reference signals. The second device may obtain the sending interval between the n reference signals by using the SCI, and may receive the reference signals at sending time.

In this manner, the n reference signals may be sent on a same time-frequency resource.

In still another possible implementation, the SCI may include the time-frequency resource information of the n reference signals and the sending interval between the n reference signals.

The second device may obtain the time-frequency resource information of the n reference signals and the sending interval between the n reference signals by using the SCI, and may receive, based on sending time, the reference signals on time-frequency resources corresponding to the time-frequency resource information of the n reference signals.

In this manner, the n reference signals may be sent on different time-frequency resources, or may be sent on a same time-frequency resource. This is not limited in this application.

With reference to the first aspect, in some implementations of the first aspect, the SCI includes first-stage SCI and second-stage SCI, the first-stage SCI includes request information, the second-stage SCI includes the time-frequency resource information of the reference signal, and the request information is used to request to perform positioning.

The first device sends the SCI to the second device, and the second device may obtain the request information and the time-frequency resource information of the reference signal by using the SCI. The request information is used to request to perform positioning, or may be understood as indicating that the first device has a positioning requirement. The time-frequency resource information of the reference signal indicates a time-frequency resource for sending the reference signal.

After obtaining the request information by using the first-stage SCI, the second device may determine whether to assist the first device in completing positioning. If the second device determines that the second device can assist the first device in completing positioning, the second device may continue to receive the second-stage SCI. If the second device determines not to assist the first device in completing positioning, the second device may not receive the second-stage SCI.

According to the positioning method provided in this application, the SCI in an existing protocol is reused to send the request message and the time-frequency resource information of the reference signal, so that a minor change is made to the protocol, and latency of a positioning process can be further shortened. This helps ensure validity and real-time performance of a positioning result.

According to a second aspect, a positioning method is provided. The method includes: A first device sends sidelink control information SCI to a second device, where the SCI includes time-frequency resource information of a reference signal. The first device receives the reference signal sent by the second device, where the reference signal is used for positioning.

The second device may send the reference signal on a time-frequency resource corresponding to the time-frequency resource information of the reference signal. After receiving the reference signal, the first device may measure the reference signal, to obtain time of arrival information, angle of arrival information, or phase of arrival information of the reference signal, and then determine location information.

According to the positioning method provided in this application, the first device indicates, by using the SCI, the second device to send the reference signal. The first device determines the location information by receiving the reference signal sent by the second device. This can reduce signaling overheads for feeding back a positioning result by the second device, simplify an interaction process, and help improve positioning efficiency.

With reference to the second aspect, in some implementations of the second aspect, the SCI further includes indication information of a sequence initialization identifier of the reference signal, or a sequence initialization identifier of the reference signal is generated based on cyclic redundancy check CRC code of the SCI.

In a possible implementation, the SCI may further include the indication information of the sequence initialization identifier of the reference signal.

The second device may obtain the indication information of the sequence initialization identifier of the reference signal by using the SCI, determine the sequence initialization identifier of the reference signal based on the indication information, and then send the reference signal to the first device based on the sequence initialization identifier of the reference signal.

In this implementation, the SCI may directly indicate the sequence initialization identifier of the reference signal, so that the second device can send the reference signal as soon as possible for positioning. This helps improve positioning efficiency.

In another possible implementation, the sequence initialization identifier of the reference signal is generated based on the CRC of the SCI.

The second device may generate the sequence initialization identifier of the reference signal by using the CRC of the SCI, and send the reference signal to the first device based on the sequence initialization identifier of the reference signal.

In this implementation, the CRC of the SCI indirectly indicates the sequence initialization identifier of the reference signal. This helps ensure transmission security.

With reference to the second aspect, in some implementations of the second aspect, the SCI further includes a quantity n of to-be-sent reference signals, where n is a positive integer. That the first device receives the reference signal sent by the second device includes: The first device receives the n reference signals sent by the second device, where the n reference signals include the reference signal.

According to the positioning method provided in this application, the first device may indicate, by using the SCI, a quantity of reference signals sent by the second device, so that the first device can receive the reference signals. This improves positioning reliability.

According to a third aspect, a positioning method is provided. The method includes: A second device receives sidelink control information SCI sent by a first device, where the SCI includes time-frequency resource information of a reference signal, and the reference signal is used for positioning. The second device receives the reference signal sent by the first device. The second device sends a response message to the first device, where the response message includes location information determined by the second device based on the reference signal.

With reference to the third aspect, in some implementations of the third aspect, the reference signal and the SCI are in a same slot.

With reference to the third aspect, in some implementations of the third aspect, in the slot, a 1st symbol occupied by the reference signal is a symbol following a last symbol occupied by the SCI.

With reference to the third aspect, in some implementations of the third aspect, a sequence initialization identifier of the reference signal is generated based on cyclic redundancy check CRC code of the SCI.

With reference to the third aspect, in some implementations of the third aspect, the sequence initialization identifier of the reference signal and the CRC satisfy the following formula:

$$N_{ID} = \sum_{i=0}^{L-1} 2^i * p_i$$

, where $p_i$ is an $i$th bit of the CRC, $L$ is a length of the CRC, and $N_{ID}$ is the sequence initialization identifier.

With reference to the third aspect, in some implementations of the third aspect, the SCI further includes indication information of first duration, and the response message is received within the first duration.

With reference to the third aspect, in some implementations of the third aspect, the SCI further includes time-frequency resource information of the response message.

With reference to the third aspect, in some implementations of the third aspect, the SCI further includes a quantity n of to-be-sent reference signals, where n is a positive integer. That the second device receives the reference signal sent by the first device includes: The second device receives the n reference signals sent by the first device, where the n reference signals include the reference signal.

With reference to the third aspect, in some implementations of the third aspect, the SCI further includes time-frequency resource information of the n reference signals and/or a sending interval between the n reference signals.

With reference to the third aspect, in some implementations of the third aspect, the SCI includes first-stage SCI and second-stage SCI, the first-stage SCI includes request information, the second-stage SCI includes the time-frequency resource information of the reference signal, and the request information is used to request to perform positioning.

According to a fourth aspect, a positioning method is provided. The method includes: A second device receives sidelink control information SCI sent by a first device, where the SCI includes time-frequency resource information of a reference signal. The second device sends the reference signal to the first device, where the reference signal is used for positioning.

With reference to the fourth aspect, in some implementations of the fourth aspect, the SCI further includes indication information of a sequence initialization identifier of the reference signal; or a sequence initialization identifier of the reference signal is generated based on cyclic redundancy check CRC code of the SCI.

With reference to the fourth aspect, in some implementations of the fourth aspect, the SCI further includes a quantity n of to-be-sent reference signals, where n is a positive integer. That the second device sends the reference signal to the first device includes: The second device sends the n reference signals to the first device, where the n reference signals include the reference signal.

According to a fifth aspect, a positioning method is provided, including: A first device sends first information to a second device, where the first information includes time-frequency resource information of a reference signal, the first information further indicates a first value, and the reference signal is used for positioning. The first device sends sidelink control information SCI to the second device, where cyclic redundancy check CRC code of the SCI and the first value are used to generate sequence identification code of the reference signal. The first device sends the reference signal to the second device. The first device receives a response message sent by the second device, where the response message includes location information determined by the second device based on the reference signal.

The first value may be a positive integer or zero. The first value indicates a value that is determined by the first device and that is used to generate the sequence identification code of the reference signal. When the first device sends the first information to different devices, first values indicated by the first information may be the same or may be different. This is not limited in this embodiment of this application.

If first values indicated by the first information are different when the first device sends the first information to different devices, sequence identification code of reference signals generated by the different devices are different. This helps ensure that different reference signals have good orthogonality to a maximum extent.

The SCI may indicate the second device to prepare to receive the reference signal. The first device may send the reference signal by using a time-frequency resource corresponding to the time-frequency resource information of the reference signal. Correspondingly, the second device may receive the reference signal on the time-frequency resource corresponding to the time-frequency resource information of the reference signal. The second device may obtain the sequence identification code of the reference signal based on the CRC of the SCI and the first value indicated by the first information, obtain sequence initialization identification code of the reference signal based on the sequence identification code of the reference signal, and may perform a correlation operation, for example, cross-correlation, on the sequence initialization identification code and the received reference signal, to obtain time of arrival information, angle of arrival information, or phase of arrival information of the reference signal. Then, the second device determines the location information based on the time of arrival information, the angle of arrival information, or the phase of arrival information, and sends the response message to the first device, where the response message includes the location information, and the location information may be location information of the first device relative to the second device. A method for obtaining and generating a sequence initialization identifier of the reference signal based on the CRC of the SCI and the first value may be agreed on in a protocol.

According to the positioning method provided in this application, when there is a positioning requirement, the first device may send, by using the first information, the time-frequency resource information of the reference signal for positioning, indicate the first value, and indicate the CRC by using the SCI, so that the second device can generate the sequence identification code of the reference signal based on the CRC of the SCI and the first value. The first device sends the reference signal on the time-frequency resource corresponding to the time-frequency resource information, so that the second device generates the sequence initialization identifier of the reference signal based on the sequence identification code of the reference signal, and performs the correlation operation on the sequence initialization identifier and the received reference signal, to obtain the time of arrival information, the angle of arrival information, or the phase of arrival information. This helps determine the location information. The first device feeds back the location information to the first device. There is little signaling exchange between the two devices. This greatly simplifies a positioning procedure, can improve positioning efficiency, and helps ensure validity and real-time performance of a positioning result.

With reference to the fifth aspect, in some implementations of the fifth aspect, the first information is sent by using higher layer signaling.

After the first device establishes a communication connection to the second device, the first device may send the first information to the second device by using the higher layer signaling. Generally, the higher layer signaling is encrypted. This can prevent other devices from maliciously tampering with the information.

With reference to the fifth aspect, in some implementations of the fifth aspect, the first information includes the first value.

This implementation is simple and direct, and requires no additional calculation. This helps improve positioning efficiency.

If the first information includes the first value, and the first information is carried in the higher layer signaling, the first value is encrypted by using the higher layer signaling. This helps improve information security. In addition, a non-target device does not disclose the location information. This helps improve device security.

With reference to the fifth aspect, in some implementations of the fifth aspect, the first information includes a value list, the value list includes the first value, the SCI includes first indication information, and the first indication information indicates a sequence number of the first value in the value list.

The value list may also be referred to as a value matrix or an array. This is not limited in this application. The value list may include at least two values, and the at least two values may include the first value. The first device sends the at least two values by using the first information, and both the two values may be used with the CRC of the SCI to generate the sequence identification code of the reference signal. The SCI may further include the first indication information. The first indication information indicates the sequence number of the first value in the value list. In other words, the first device indicates, by using the SCI, the second device to select the first value from the value list, and to generate the sequence identification code of the reference signal by using the first value and the CRC of the SCI.

In this implementation, a method for indirectly indicating the first value is used, and the first value is not directly represented. This helps improve information security.

If the first information includes the value list, and the first information is carried in the higher layer signaling, the value list is encrypted by using the higher layer signaling. This helps improve information security. In addition, a non-target device does not disclose the location information. This helps improve device security.

With reference to the fifth aspect, in some implementations of the fifth aspect, the sequence identification code of the reference signal, the CRC, and the first value satisfy the following formula:

$$n_{ID,seq}^{SL-PRS} = \left( N_{ID}^{X} + n_{ID,m}^{PRS} \right) \mathrm{mod}\, 2^{12} \,,$$

where

$N_{ID}^{X}$ is the CRC represented in decimal notation, $n_{ID,m}^{PRS}$ is the first value, and $n_{ID,seq}^{SL-PRS}$ is the sequence identification code of the reference signal.

With reference to the fifth aspect, in some implementations of the fifth aspect, the sequence identification code of the reference signal includes first sequence identification code and second sequence identification code, and the first sequence identification code, the second sequence identification code, the CRC, and the first value satisfy the following formulas:

$$n_{ID,seq1}^{SL-PRS} = N_{ID}^{X} \,,$$

and

$$n_{ID,seq2}^{SL-PRS} = n_{ID,m}^{PRS} \,,$$

where

$N_{ID}^{X}$ is the CRC represented in decimal notation, $n_{ID,m}^{PRS}$ is the first value, $n_{ID,seq1}^{SL-PRS}$ is the first sequence identification code, and $n_{ID,seq2}^{SL-PRS}$ is the second sequence identification code.

With reference to the fifth aspect, in some implementations of the fifth aspect, the first sequence identification code and the second sequence identification code are used to generate the sequence initialization identification code of the reference signal, and the first sequence identification code, the second sequence identification code, and the sequence initialization identification code of the reference signal satisfy the following formula:

$$c_{init} = \left( 2^{22} \left[ \frac{n_{ID,seq2}^{SL-PRS}}{1024} \right] + 2^{10} (N_{symb}^{slot} n_{s,f}^{\mu} + l + 1)(2(n_{ID,seq2}^{SL-PRS} \bmod 1024) + 1) + (n_{ID,seq1}^{SL-PRS} \bmod 1024) \right) \bmod 2^{31} \,,$$

where

$c_{init}$ is the sequence initialization identification code of the reference signal, $n_{s,f}^{\mu}$ is a sequence number of a slot in which the reference signal is, $N_{symb}^{slot}$ is a quantity of symbols included in the slot, and $l$ is a sequence number of a symbol occupied by the reference signal in the slot.

According to the positioning method provided in this application, the sequence initialization identifier of the reference signal may be generated based on the CRC of the SCI and the first value according to the foregoing formula, so that a local reference signal is subsequently generated based on the sequence initialization identifier. Then, the local reference signal is compared with the received reference signal, so that the local reference signal can be quickly generated, and positioning can be quickly implemented.

According to a sixth aspect, a positioning method is provided, including: A second device receives first information sent by a first device, where the first information includes time-frequency resource information of a reference signal, the first information further indicates a first value, and the reference signal is used for positioning. The second device receives sidelink control information SCI sent by the first device, where cyclic redundancy check CRC code of the SCI and the first value are used to generate sequence identification code of the reference signal. The second device receives the reference signal sent by the first device. The second device sends a response message to the first device, where the response message includes location information determined by the second device based on the reference signal.

With reference to the sixth aspect, in some implementations of the sixth aspect, the first information is received by using higher layer signaling.

With reference to the sixth aspect, in some implementations of the sixth aspect, the first information includes the first value.

With reference to the sixth aspect, in some implementations of the sixth aspect, the first information includes a value list, the value list includes the first value, the SCI includes first indication information, and the first indication information indicates a sequence number of the first value in the value list.

With reference to the sixth aspect, in some implementations of the sixth aspect, the sequence identification code of the reference signal, the CRC, and the first value satisfy the following formula:

$$n_{ID,\,seq}^{SL-PRS} = \left( N_{ID}^{X} + n_{ID,\,m}^{PRS} \right) \bmod 2^{12} \,,$$

where

$N_{ID}^{X}$ is the CRC represented in decimal notation, $n_{ID,\,m}^{PRS}$ is the first value, and $n_{ID,\,seq}^{SL-PRS}$ is the sequence identification code of the reference signal.

With reference to the sixth aspect, in some implementations of the sixth aspect, the sequence identification code of the reference signal includes first sequence identification code and second sequence identification code, and the first sequence identification code, the second sequence identification code, the CRC, and the first value satisfy the following formulas:

$$n_{ID,\,seq1}^{SL-PRS} = N_{ID}^{X} \,,$$

and

$$n_{ID,\,seq2}^{SL-PRS} = n_{ID,\,m}^{PRS} \,,$$

where

$N_{ID}^{X}$ is the CRC represented in decimal notation, $n_{ID,\,m}^{PRS}$ is the first value, $n_{ID,\,seq1}^{SL-PRS}$ is the first sequence identification code, and $n_{ID,\,seq2}^{SL-PRS}$ is the second sequence identification code.

With reference to the sixth aspect, in some implementations of the sixth aspect, the first sequence identification code and the second sequence identification code are used to generate sequence initialization identification code of the reference signal, and the first sequence identification code, the second sequence identification code, and the sequence initialization identification code of the reference signal satisfy the following formula:

$$c_{init} = \left( 2^{22} \left\lceil \frac{n_{ID,\,seq2}^{SL-PRS}}{1024} \right\rceil + 2^{10} (N_{symb}^{slot} n_{s,\,f}^{\mu} + l + 1)(2(n_{ID,\,seq2}^{SL-PRS} \bmod 1024) + 1) + (n_{ID,\,seq1}^{SL-PRS} \bmod 1024) \right) \bmod 2^{31} \,,$$

where

$c_{init}$ is the sequence initialization identification code of the reference signal, $n_{s,\,f}^{\mu}$ is a sequence number of a slot in which the reference signal is, $N_{symb}^{slot}$ is a quantity of symbols included in the slot, and $l$ is a sequence number of a symbol occupied by the reference signal in the slot.

According to a seventh aspect, a positioning apparatus is provided. The apparatus includes a sending unit and a receiving unit. The sending unit is configured to: send sidelink control information SCI to a second device, where the SCI includes time-frequency resource information of a reference signal, and the reference signal is used for positioning; and send the reference signal to the second device. The receiving unit is configured to receive a response message sent by the second device, where the response message includes location information determined by the second device based on the reference signal.

With reference to the seventh aspect, in some implementations of the seventh aspect, the reference signal and the SCI are in a same slot.

With reference to the seventh aspect, in some implementations of the seventh aspect, in the slot, a 1st symbol occupied by the reference signal is a symbol following a last symbol occupied by the SCI.

With reference to the seventh aspect, in some implementations of the seventh aspect, a sequence initialization identifier of the reference signal is generated based on cyclic redundancy check CRC code of the SCI.

With reference to the seventh aspect, in some implementations of the seventh aspect, the sequence initialization identifier of the reference signal and the CRC satisfy the following formula:

$$N_{ID} = \sum_{i=0}^{L-1} 2^i * p_i,$$

where
$p_i$ is an $i$th bit of the CRC, $L$ is a length of the CRC, and $N_{ID}$ is the sequence initialization identifier.

With reference to the seventh aspect, in some implementations of the seventh aspect, the SCI further includes indication information of first duration, and the response message is received within the first duration.

With reference to the seventh aspect, in some implementations of the seventh aspect, the SCI further includes time-frequency resource information of the response message.

With reference to the seventh aspect, in some implementations of the seventh aspect, the SCI further includes a quantity n of to-be-sent reference signals, where n is a positive integer. The sending unit is further configured to send the n reference signals to the second device, where the n reference signals include the reference signal.

With reference to the seventh aspect, in some implementations of the seventh aspect, the SCI further includes time-frequency resource information of the n reference signals and/or a sending interval between the n reference signals.

With reference to the seventh aspect, in some implementations of the seventh aspect, the SCI includes first-stage SCI and second-stage SCI, the first-stage SCI includes request information, the second-stage SCI includes the time-frequency resource information of the reference signal, and the request information is used to request to perform positioning. According to an eighth aspect, a positioning apparatus is provided. The apparatus includes a sending unit and a receiving unit. The sending unit is configured to send sidelink control information SCI to a second device, where the SCI includes time-frequency resource information of a reference signal. The receiving unit is configured to receive the reference signal sent by the second device, where the reference signal is used for positioning.

With reference to the eighth aspect, in some implementations of the eighth aspect, the SCI further includes indication information of a sequence initialization identifier of the reference signal; or a sequence initialization identifier of the reference signal is generated based on cyclic redundancy check CRC code of the SCI.

With reference to the eighth aspect, in some implementations of the eighth aspect, the SCI further includes a quantity n of to-be-sent reference signals, where n is a positive integer. The receiving unit is further configured to receive the n reference signals sent by the second device, where the n reference signals include the reference signal.

According to a ninth aspect, a positioning apparatus is provided. The apparatus includes a receiving unit and a sending unit. The receiving unit is configured to: receive sidelink control information SCI sent by a first device, where the SCI includes time-frequency resource information of a reference signal, and the reference signal is used for positioning; and receive the reference signal sent by the first device. The sending unit is configured to send a response message to the first device, where the response message includes location information determined based on the reference signal.

With reference to the ninth aspect, in some implementations of the ninth aspect, the reference signal and the SCI are in a same slot.

With reference to the ninth aspect, in some implementations of the ninth aspect, in the slot, a 1st symbol occupied by the reference signal is a symbol following a last symbol occupied by the SCI.

With reference to the ninth aspect, in some implementations of the ninth aspect, a sequence initialization identifier of the reference signal is generated based on cyclic redundancy check CRC code of the SCI.

With reference to the ninth aspect, in some implementations of the ninth aspect, the sequence initialization identifier of the reference signal and the CRC satisfy the following formula:

$$N_{ID} = \sum_{i=0}^{L-1} 2^i * p_i,$$

where

$p_i$ is an $i$th bit of the CRC, $L$ is a length of the CRC, and $N_{ID}$ is the sequence initialization identifier.

With reference to the ninth aspect, in some implementations of the ninth aspect, the SCI further includes indication information of first duration, and the response message is received within the first duration.

With reference to the ninth aspect, in some implementations of the ninth aspect, the SCI further includes time-frequency resource information of the response message.

With reference to the ninth aspect, in some implementations of the ninth aspect, the SCI further includes a quantity n of to-be-sent reference signals, where n is a positive integer. The receiving unit is further configured to receive the n reference signals sent by the first device, where the n reference signals include the reference signal.

With reference to the ninth aspect, in some implementations of the ninth aspect, the SCI further includes time-frequency resource information of the n reference signals and/or a sending interval between the n reference signals.

With reference to the ninth aspect, in some implementations of the ninth aspect, the SCI includes first-stage SCI and second-stage SCI, the first-stage SCI includes request information, the second-stage SCI includes the time-frequency resource information of the reference signal, and the request information is used to request to perform positioning.

According to a tenth aspect, a positioning apparatus is provided. The apparatus includes a receiving unit and a sending unit. The receiving unit is configured to receive sidelink control information SCI sent by a first device, where the SCI includes time-frequency resource information of a reference signal. The sending unit is configured to send the reference signal to the first device, where the reference signal is used for positioning.

With reference to the tenth aspect, in some implementations of the tenth aspect, the SCI further includes indication information of a sequence initialization identifier of the reference signal; or a sequence initialization identifier of the reference signal is generated based on cyclic redundancy check CRC code of the SCI.

With reference to the tenth aspect, in some implementations of the tenth aspect, the SCI further includes a quantity n of to-be-sent reference signals, where n is a positive integer. The sending unit is further configured to send the n reference signals to the first device, where the n reference signals include the reference signal.

According to an eleventh aspect, a positioning apparatus is provided. The apparatus includes a sending unit and a receiving unit. The sending unit is configured to: send first information to a second device, where the first information includes time-frequency resource information of a reference signal, the first information further indicates a first value, and the reference signal is used for positioning; send sidelink control information SCI to the second device, where cyclic redundancy check CRC code of the SCI and the first value are used to generate sequence identification code of the reference signal; and send the reference signal to the second device. The receiving unit is configured to receive a response message sent by the second device, where the response message includes location information determined by the second device based on the reference signal.

With reference to the eleventh aspect, in some implementations of the eleventh aspect, the first information is sent by using higher layer signaling.

With reference to the eleventh aspect, in some implementations of the eleventh aspect, the first information includes the first value.

With reference to the eleventh aspect, in some implementations of the eleventh aspect, the first information includes a value list, the value list includes the first value, the SCI includes first indication information, and the first indication information indicates a sequence number of the first value in the value list.

With reference to the eleventh aspect, in some implementations of the eleventh aspect, the sequence identification code of the reference signal, the CRC, and the first value satisfy the following formula:

$$n_{ID, seq}^{SL-PRS} = \left( N_{ID}^X + n_{ID, m}^{PRS} \right) \bmod 2^{12},$$

where

$N_{ID}^X$ is the CRC represented in decimal notation, $n_{ID, m}^{PRS}$ is the first value, and $n_{ID, seq}^{SL-PRS}$ is the sequence identification code of the reference signal.

With reference to the eleventh aspect, in some implementations of the eleventh aspect, the sequence identification code of the reference signal includes first sequence identification code and second sequence identification code, and the first sequence identification code, the second sequence identification code, the CRC, and the first value satisfy the following formulas:

$$n_{ID, seq1}^{SL-PRS} = N_{ID}^{X},$$

and

$$n_{ID, seq2}^{SL-PRS} = n_{ID, m}^{PRS},$$

where

$N_{ID}^{X}$ is the CRC represented in decimal notation, $n_{ID, m}^{PRS}$ is the first value, $n_{ID, seq1}^{SL-PRS}$ is the first sequence identification code, and $n_{ID, seq2}^{SL-PRS}$ is the second sequence identification code.

With reference to the eleventh aspect, in some implementations of the eleventh aspect, the first sequence identification code and the second sequence identification code are used to generate sequence initialization identification code of the reference signal, and the first sequence identification code, the second sequence identification code, and the sequence initialization identification code of the reference signal satisfy the following formula:

$$c_{init} = \left( 2^{22} \left\lceil \frac{n_{ID, seq2}^{SL-PRS}}{1024} \right\rceil + 2^{10} (N_{symb}^{slot} n_{s, f}^{\mu} + l + 1)(2(n_{ID, seq2}^{SL-PRS} \bmod 1024) + 1) + (n_{ID, seq1}^{SL-PRS} \bmod 1024) \right) \bmod 2^{31},$$

where

$c_{init}$ is the sequence initialization identification code of the reference signal, $n_{s, f}^{\mu}$ is a sequence number of a slot in which the reference signal is, $N_{symb}^{slot}$ is a quantity of symbols included in the slot, and $l$ is a sequence number of a symbol occupied by the reference signal in the slot.

According to a twelfth aspect, a positioning apparatus is provided. The apparatus includes a receiving unit and a sending unit. The receiving unit is configured to: receive first information sent by a first device, where the first information includes time-frequency resource information of a reference signal, the first information further indicates a first value, and the reference signal is used for positioning; receive sidelink control information SCI sent by the first device, where cyclic redundancy check CRC code of the SCI and the first value are used to generate sequence identification code of the reference signal; and receive the reference signal sent by the first device. The sending unit is configured to send a response message to the first device, where the response message includes location information determined based on the reference signal.

With reference to the twelfth aspect, in some implementations of the twelfth aspect, the first information is received by using higher layer signaling.

With reference to the twelfth aspect, in some implementations of the twelfth aspect, the first information includes the first value.

With reference to the twelfth aspect, in some implementations of the twelfth aspect, the first information includes a value list, the value list includes the first value, the SCI includes first indication information, and the first indication information indicates a sequence number of the first value in the value list.

With reference to the twelfth aspect, in some implementations of the twelfth aspect, the sequence identification code of the reference signal, the CRC, and the first value satisfy the following formula:

$$n_{ID, seq}^{SL-PRS} = \left( N_{ID}^{X} + n_{ID, m}^{PRS} \right) \bmod 2^{12},$$

where

$N_{ID}^{X}$ is the CRC represented in decimal notation, $n_{ID, m}^{PRS}$ is the first value, and $n_{ID, seq}^{SL-PRS}$ is the sequence identification code of the reference signal.

With reference to the twelfth aspect, in some implementations of the twelfth aspect, the sequence identification code of the reference signal includes first sequence identification code and second sequence identification code, and the first sequence identification code, the second sequence identification code, the CRC, and the first value satisfy the following formulas:

$$n_{ID,seq1}^{SL-PRS} = N_{ID}^{X},$$

and

$$n_{ID,seq2}^{SL-PRS} = n_{ID,m}^{PRS},$$

where

$N_{ID}^{X}$ is the CRC represented in decimal notation, $n_{ID,m}^{PRS}$ is the first value, $n_{ID,seq1}^{SL-PRS}$ is the first sequence identification code, and $n_{ID,seq2}^{SL-PRS}$ is the second sequence identification code.

With reference to the twelfth aspect, in some implementations of the twelfth aspect, the first sequence identification code and the second sequence identification code are used to generate sequence initialization identification code of the reference signal, and the first sequence identification code, the second sequence identification code, and the sequence initialization identification code of the reference signal satisfy the following formula:

$$c_{init} = \left( 2^{22} \left\lceil \frac{n_{ID,seq2}^{SL-PRS}}{1024} \right\rceil + 2^{10} (N_{symb}^{slot} n_{s,f}^{\mu} + l + 1)(2(n_{ID,seq2}^{SL-PRS} \bmod 1024) + 1) + (n_{ID,seq1}^{SL-PRS} \bmod 1024) \right) \bmod 2^{31},$$

where

$c_{init}$ is the sequence initialization identification code of the reference signal, $n_{s,f}^{\mu}$ is a sequence number of a slot in which the reference signal is, $N_{symb}^{slot}$ is a quantity of symbols included in the slot, and $l$ is a sequence number of a symbol occupied by the reference signal in the slot.

According to a thirteenth aspect, a communication apparatus or a positioning apparatus is provided, including a processor and a memory. The memory is configured to store a computer program. The processor is configured to invoke the computer program from the memory and run the computer program, so that the apparatus performs the method according to any possible implementation of any one of the foregoing aspects.

Optionally, there are one or more processors, and there are one or more memories.

Optionally, the memory may be integrated with the processor, or the memory and the processor are separately disposed.

Optionally, the positioning apparatus further includes a transmitting machine (transmitter) and a receiving machine (receiver). The transmitting machine and the receiving machine may be separately disposed, or may be integrated together to be referred to as a transceiver machine (transceiver).

According to a fourteenth aspect, this application provides a processor, including: an input circuit, an output circuit, and a processing circuit. The processing circuit is configured to: receive a signal through the input circuit, and transmit a signal through the output circuit, so that the processor performs the method according to any possible implementation of any one of the foregoing aspects.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

According to a fifteenth aspect, a first device is provided, including an apparatus configured to implement the method according to any one of the first aspect or the possible implementations of the first aspect, an apparatus configured to implement the method according to any one of the third aspect or the possible implementations of the third aspect, and an apparatus configured to implement the method according to any one of the fifth aspect or the possible implementations of the fifth aspect.

According to a sixteenth aspect, a second device is provided, including an apparatus configured to implement the method according to any one of the second aspect or the possible implementations of the second aspect, an apparatus configured to implement the method according to any one of the fourth aspect or the possible implementations of the fourth aspect, and an apparatus configured to implement the method according to any one of the sixth aspect or the possible implementations of the sixth aspect.

According to a seventeenth aspect, a communication system is provided, including the first device in the fifteenth aspect and the second device in the sixteenth aspect.

According to an eighteenth aspect, a computer-readable storage medium is provided. The computer-readable storage medium stores a computer program (which may also be referred to as code or instructions). When the computer program is run on a computer, the computer is enabled to perform the method according to any possible implementation of any one of the foregoing aspects.

According to a nineteenth aspect, a computer program product is provided. The computer program product includes a computer program (which may also be referred to as code or instructions). When the computer program is run, a computer is enabled to perform the method according to any possible implementation of any one of the foregoing aspects.

## BRIEF DESCRIPTION OF DRAWINGS

FIG. 1 is a diagram of a communication system to which an embodiment of this application is applicable;
FIG. 2 is a schematic flowchart of a positioning manner;
FIG. 3 is a schematic flowchart of a positioning method according to an embodiment of this application;
FIG. 4 is a diagram of a slot according to an embodiment of this application;
FIG. 5 is a diagram of a time-frequency resource according to an embodiment of this application;
FIG. 6 is a diagram of another slot according to an embodiment of this application;
FIG. 7 is a schematic flowchart of another positioning method according to an embodiment of this application;
FIG. 8 is a schematic flowchart of still another positioning method according to an embodiment of this application;
FIG. 9 is a block diagram of a positioning apparatus according to an embodiment of this application; and
FIG. 10 is a block diagram of another positioning apparatus according to an embodiment of this application.

## DESCRIPTION OF EMBODIMENTS

The following describes technical solutions of this application with reference to accompanying drawings.

Currently, in a cellular network communication system, there are a plurality of positioning methods. A cellular network communication technology is a communication technology between a terminal device and a network device. For example, a 3rd generation partnership project (the 3rd generation partnership project, 3GPP) release 16 (release 16, Rel-16) may support a plurality of positioning methods such as a downlink time difference of arrival (downlink time delay of arrival, DL-TDOA), a downlink angle of departure (downlink angle of departure, DL-AOD), an uplink time difference of arrival (uplink time delay of arrival, UL-TDOA), an uplink angle of arrival (uplink angle of arrival, UL-AOA), and a multi-round trip time (multi-round trip time, multi-RTT).

The DL-TDOA, UL-TDOA, and multi-RTT are positioning methods based on time of arrival. A receive end measures time of arrival of a reference signal sent by a transmit end, and infers a location of the transmit end based on time information of a plurality of receive ends at a known location. The DL-AOD and UL-AOA are angle-based positioning methods. A receive end measures an angle of arrival of a reference signal sent by a transmit end, and infers a location of the receive end based on angle information between the receive end and a plurality of transmit ends at a known location.

It can be learned from the foregoing plurality of positioning methods that, to implement positioning, a basic condition is to send a positioning reference signal (positioning reference signal, PRS), and then measurement is performed on the positioning reference signal, to obtain time information or angle information, to calculate a distance and a location.

In SL communication, how to support a positioning function has not been considered yet, but adding the positioning function for the SL communication is an inevitable trend. The SL communication is communication between terminal devices.

If a positioning method in cellular communication is applied to the SL communication, that is, a positioning reference signal is configured in a manner in cellular communication, an entire positioning process is excessively complex. Consequently, the terminal device cannot quickly sense location information of a surrounding target, causing an irreparable loss.

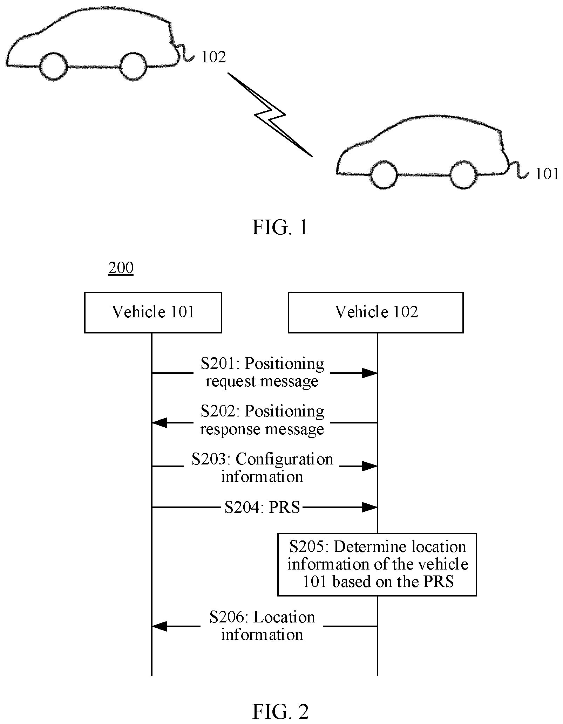

For example, FIG. 1 is a diagram of a communication system 100. As shown in FIG. 1, the communication system 100 includes a vehicle 101 and a vehicle 102. The vehicle 101 and the vehicle 102 may communicate with each other. It should be understood that both the vehicle 101 and the vehicle 102 are terminal devices, and communication between the vehicle 101 and the vehicle 102 is communication between terminal devices.

Both the vehicle 101 and the vehicle 102 may have a positioning function. The vehicle 101 may obtain location information of the vehicle 102 based on an existing positioning manner, and the vehicle 102 may obtain location information of the vehicle 101 based on an existing positioning manner.

A method for obtaining the location information of the vehicle 102 by the vehicle 101 may be shown in FIG. 2. The method for obtaining the location information of the vehicle 102 by the vehicle 101 may include the following steps.

S201: The vehicle 101 sends a positioning request message to the vehicle 102, where the positioning request message is used to request the vehicle 102 to perform positioning. Correspondingly, the vehicle 102 receives the positioning request message.

S202: The vehicle 102 sends a positioning response message to the vehicle 101 based on the positioning request message, where the positioning response message indicates that the vehicle 102 can perform positioning. Correspondingly, the vehicle 101 receives the positioning response message.

S203: The vehicle 101 sends configuration information of a PRS to the vehicle 102 based on the positioning response message, where the configuration information includes information such as a time-frequency location of the PRS. Correspondingly, the vehicle 102 receives the configuration information of the PRS.

S204: The vehicle 101 sends the PRS to the vehicle 102 based on the configuration information of the PRS. Correspondingly, the vehicle 102 receives the PRS.

S205: The vehicle 102 determines location information of the vehicle 101 based on the PRS.

S206: The vehicle 102 sends the location information to the vehicle 101. Correspondingly, the vehicle 101 receives the location information.

It can be learned from the schematic flowchart shown in FIG. 2 that the vehicle 101 needs at least six steps to obtain the location information, and long time is required to obtain the location information. In the scenario shown in FIG. 1, a speed of the vehicle 101 may be fast. If location information of a surrounding target cannot be obtained in time, various accidents may occur, causing an irreparable loss.

In view of this, embodiments of this application provide a positioning method and a positioning apparatus, to reduce unnecessary latency in a positioning process. This helps improve positioning efficiency.

The positioning method provided in embodiments of this application is applied to SL communication, and can meet various requirements of a standard for adding a positioning function in the SL communication.

For example, the positioning method provided in embodiments of this application may meet the following requirements:

(1) The positioning method provided in embodiments of this application is applicable to a coverage scenario within network coverage, with partial network coverage, and outside network coverage.
(2) Positioning accuracy of the positioning method provided in embodiments of this application may meet positioning accuracy specified in 3GPP technical report (technical report, TR) 38.845, technical specification (technical specification, TS) 22.261, and TS 22.104 protocol.
(3) The positioning method provided in embodiments of this application is applicable to a vehicle to everything (vehicle to everything, V2X) scenario and a public safety scenario in TR 38.845, a business scenario in TS 22.261, and an industrial internet of things (industrial internet of things, IIoT) scenario in TS 22.104.
(4) A spectrum used in the positioning method provided in embodiments of this application includes an intelligent transportation system (intelligent transportation system, ITS) and a licensed spectrum.

The positioning method provided in embodiments of this application is applicable to two resource allocation modes in an NR sidelink. The two resource allocation modes may be a mode 1 (Model-1) and a mode 2 (Model-2).

The mode 1 is a mode in which a network device performs resource allocation, to be specific, the network device configures a radio resource for a terminal device. In addition, the mode 1 also means that the terminal device is within network coverage.

Specifically, the mode 1 may include three resource configuration manners. The three resource configuration manners are respectively a dynamic grant (DG, dynamic grant), a configuration grant type-1 (CG-1, configuration grant type-1), and a configuration grant type-2 (CG-2, configuration grant type-2). The DG refers to dynamic resource allocation, to be specific, the terminal device may report a scheduling request, and after receiving the scheduling request, the network device allocates a specific resource to the terminal device for data transmission. The CG-1 refers to that the network device pre-configures a specific resource for the terminal device, and the terminal device may directly send data on the preconfigured resource when data transmission exists. The CG-2 refers to that the network device pre-configures a plurality of sets of resources for the terminal device, and after the network device activates the resources, the terminal device may perform data transmission on the activated resources.

The mode 2 is a mode in which the terminal device performs resource allocation, to be specific, the terminal device may perform resource sensing, and select resources on which data can be sent.

Specifically, the terminal device may monitor a signal of another terminal device at all possible locations in a resource pool, to learn of a resource occupied by the another terminal device. The terminal device may perform data transmission on an unoccupied resource in the resource pool.

For ease of understanding a scenario to which embodiments of this application are applicable, the following describes in detail the scenario to which embodiments of this application are applicable.

The technical solutions in embodiments of this application may be applied to a dual connectivity (dual connectivity, DC) communication system. The dual connectivity communication system supports deployment of two different radio access systems, and allows devices to communicate with each other based on the two different radio access systems, so that radio resource utilization can be improved, system handover latency can be reduced, and user and system performance can be improved. In the dual connectivity communication system, two types of network devices that support different radio access systems are both deployed. Similarly, a terminal device may support access to both of the two different types of network devices. Further, the technical solutions in embodiments of this application may be applied to an internet of vehicles, for example, vehicle-to-everything (vehicle-to-everything, V2X) communication, long term evolution-vehicle (long term evolution-vehicle, LTE-V) communication, and vehicle-to-vehicle (vehicle-to-vehicle, V2V) communication, or may be applied to fields such as intelligent driving and intelligent connected vehicles.

The method and the apparatus provided in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a $5^{th}$ generation ($5^{th}$ generation, 5G) system, a new radio (new radio, NR) system, or another evolved communication system. For example, a long term evolution (long term evolution, LTE) system and a new radio (new radio, NR) system may be both deployed in the dual connectivity communication system. This is not limited in embodiments of this application.

The terminal device in embodiments of this application may also be referred to as a vehicle, user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The terminal device may be a device that provides voice/data connectivity for a user, for example, a handheld device having a wireless connection function or a vehicle-mounted device. Currently, some examples of the terminal are as follows: a mobile phone (mobile phone), a tablet computer, a notebook computer, a handheld computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, or a terminal device in a future evolved public land mobile communication network (public land mobile network, PLMN). This is not limited in embodiment of this application.

In addition, in embodiments of this application, the terminal device may alternatively be a terminal device in an internet of things (internet of things, IoT) system. IoT is an important part of future development of information technologies. A main technical feature of the IoT is connecting a thing to a network by using a communication technology, to implement an intelligent network for human-machine interconnection and thing-thing interconnection. The terminal device in this application may alternatively be a vehicle-mounted module, a vehicle-mounted component, a vehicle-mounted chip, or an on-board unit that is built in a vehicle as one or more components or units. The vehicle may implement the method in this application through the built-in vehicle-mounted module, vehicle-mounted component, vehicle-mounted chip, or on-board unit. Therefore, embodiments of this application may be applied to the internet of vehicles, for example, vehicle-to-everything (vehicle-to-everything, V2X), long term evolution-vehicle (long term evolution-vehicle, LTE-V), and vehicle-to-vehicle (vehicle-to-vehicle, V2V).

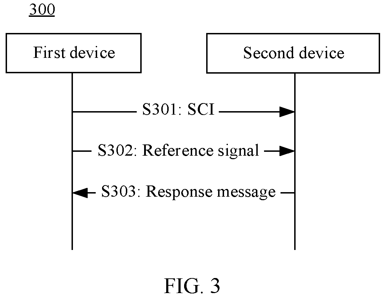

FIG. 3 is a schematic flowchart of a positioning method 300 according to an embodiment of this application. The method 300 may be applied to the scenario shown in FIG. 1. However, this embodiment of this application is not limited thereto. The method 300 may include the following steps.

S301: A first device sends sidelink control information (sidelink control information, SCI) to a second device, where the SCI includes time-frequency resource information of a reference signal, and the reference signal is used for positioning. Correspondingly, the second device receives the SCI.

The first device and the second device may be different terminal devices. For example, the first device may be the vehicle 101 shown in FIG. 1, and the second device may be the vehicle 102 shown in FIG. 1.

The SCI may be sent by the first device in a broadcast manner, or may be sent by the first device in a unicast manner. This is not limited in this embodiment of this application.

If the SCI is sent by the first device in a broadcast manner, the second device is only one of devices that receive the SCI. If the SCI is sent by the first device in a unicast manner, only the second device can receive the SCI.

The SCI may be SCI specially formulated in a protocol for positioning, or may reuse existing SCI in the protocol. This is not limited in this embodiment of this application.

When the SCI is the SCI specially formulated in the protocol for positioning, the protocol may formulate a new radio network temporary identifier (radio network temporary identity, RNTI) to scramble the SCI.

In this manner, when performing positioning, the first device may use the SCI, and the second device performs positioning after receiving the SCI. This can improve positioning efficiency.

When the SCI reuses the existing SCI in the protocol, positioning may be implemented without changing a specification of the existing protocol.

The reference signal is used for positioning, and may also be referred to as a PRS. However, this embodiment of this application is not limited thereto.

The SCI includes the time-frequency resource information of the reference signal. The time-frequency resource information of the reference signal may be understood as the configuration information in the foregoing method 200. However, this embodiment of this application is not limited thereto.

Optionally, the SCI may further include at least one piece of the following information: a quantity of resource blocks (resource blocks, RBs) occupied by the reference signal in frequency domain, a quantity of symbols occupied by the reference signal in time domain, or a frequency domain interval.

Optionally, before the first device sends the SCI to the second device, the first device may further send a request message to the second device by using the SCI. The request message is used to request the second device to perform positioning. To be specific, the first device sends the SCI to the second device, where the SCI includes the request message; and then the first device sends the SCI to the second device, where the SCI includes the time-frequency resource information of the reference signal.

Optionally, the SCI may further include a request message. The request message is used to request the second device to perform positioning.

In this implementation, the first device may send the request message and the time-frequency resource information of the reference signal to the second device by using one piece of SCI, so that signaling can be reduced.

S302: The first device sends the reference signal to the second device. Correspondingly, the second device receives the reference signal.

The first device may send the reference signal by using a time-frequency resource corresponding to the time-frequency resource information of the reference signal. Correspondingly, the second device may receive the reference signal on the time-frequency resource corresponding to the time-frequency resource information of the reference signal.

For example, the second device may obtain the SCI through blind detection, and then receive the reference signal on the time-frequency resource corresponding to the time-frequency resource information of the reference signal.

S303: The second device sends a response message to the first device, where the response message includes location information determined by the second device based on the reference signal. Correspondingly, the first device receives the response message.

The second device may measure the reference signal to obtain time of arrival information, angle of arrival information, or phase of arrival information of the reference signal, then determine the location information based on the time of arrival information, the angle of arrival information, or the phase of arrival information, and send the response message to the first device. The response message includes the location information.

That the response message includes the location information determined by the second device based on the reference signal is merely an implementation. In another possible implementation, the response message may include the time of arrival information, the angle of arrival information, or the phase of arrival information of the reference signal. After receiving the time of arrival information, the angle of arrival information, or the phase of arrival information of the reference signal, the first device may determine the location information based on the time of arrival information, the angle of arrival information, or the phase of arrival information.

According to the positioning method provided in this embodiment of this application, when there is a positioning requirement, the first device may send, by using the SCI, the time-frequency resource information of the reference signal for positioning, and send the reference signal on the time-frequency resource corresponding to the time-frequency resource information. The second device receives the SCI and the reference signal, determines the location information based on the reference signal, and feeds back the location information to the first device. There is little signaling exchange between the two devices. This greatly simplifies a positioning procedure, can improve positioning efficiency, and helps ensure validity and real-time performance of a positioning result.

In an optional embodiment, the reference signal and the SCI are in a same slot.

The reference signal and the SCI may be located in different symbols in the same slot. In one slot, a symbol occupied by the reference signal may be adjacent to or may not be adjacent to a symbol occupied by the SCI. This is not limited in this embodiment of this application.

In this implementation, after obtaining the SCI through parsing, the second device can quickly obtain the reference signal through parsing, so that receiving latency can be reduced, and positioning efficiency can be further improved.

If in one slot, the symbol occupied by the reference signal is adjacent to the symbol occupied by the SCI, in a possible implementation, in the slot, a $1^{st}$ symbol occupied by the reference signal is a symbol following a last symbol occupied by the SCI; or in another possible implementation, in the slot, a $1^{st}$ symbol occupied by the SCI is a symbol following a last symbol occupied by the reference signal.

Optionally, the slot in which the reference signal and the SCI are may further include an automatic gain control (automatic gain control, AGC) symbol.

When a bandwidth of the reference signal is different from a bandwidth of the SCI, a bandwidth of the AGC symbol may be consistent with the bandwidth of the reference signal, or may be consistent with the bandwidth of the SCI. This is not limited in this embodiment of this application.

If the bandwidth of the AGC symbol is consistent with the bandwidth of the reference signal, the second device may obtain the reference signal based on power adjusted by using the AGC symbol.

Optionally, the slot in which the reference signal and the SCI are may further include a gap (GAP) symbol. The GAP symbol is used to switch a transmission direction. A symbol occupied by the GAP symbol may be after the symbol occupied by the reference signal. However, this embodiment of this application is not limited thereto.

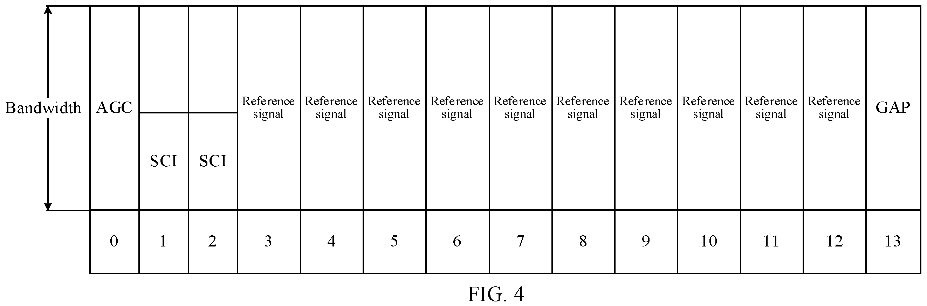

For example, FIG. 4 is a diagram of a slot. As shown in FIG. 4, the slot includes 14 symbols, and sequence numbers of the 14 symbols are respectively 0, 1, 2, 3, 4, 5, 6, 7, 8, 9, 10, 11, 12, and 13.

The SCI and the reference signal are located in different symbols in a same slot, and the $1^{st}$ symbol occupied by the reference signal is the symbol following the last symbol occupied by the SCI. Sequence numbers of symbols occupied by the SCI include 1 and 2, and sequence numbers of symbols occupied by the reference signal include 3 to 12. The bandwidth of the SCI is different from the bandwidth of the reference signal.

The slot in which the SCI and the reference signal are further includes an AGC symbol and a GAP symbol. A sequence number of a symbol occupied by the AGC symbol is 0, and a sequence number of a symbol occupied by the GAP symbol is 13. A bandwidth of the AGC symbol and a bandwidth of the GAP symbol are the same as the bandwidth of the reference signal.

It should be noted that quantities of symbols occupied by the SCI, the reference signal, the AGC symbol, and the GAP symbol, and the bandwidths occupied by the SCI, the reference signal, the AGC symbol, and the GAP symbol are merely an example. This is not limited in this embodiment of this application.

In an optional embodiment, a sequence initialization identifier of the reference signal is generated based on cyclic redundancy check (cyclic redundancy check, CRC) code of the SCI.

A method for generating the sequence initialization identifier of the reference signal based on the CRC of the SCI may be agreed on in a protocol.

After receiving the SCI, the second device may generate the sequence initialization identifier of the reference signal based on the CRC of the SCI, and perform a correlation operation on the sequence initialization identifier and the received reference signal, to obtain the time of arrival information, the angle of arrival information, or the phase of arrival information. A quantity of bits of the CRC may be 24. However, this embodiment of this application is not limited thereto.

The sequence initialization identifier of the reference signal may be used to distinguish between different reference signals.

In a possible implementation, for reference signals sent by different first devices, sequence initialization identifiers of the reference signals may be different.

In another possible implementation, for reference signals sent by the first device to different second terminal devices, sequence initialization identifiers of the reference signals may be different.

A sequence type of the sequence initialization identifier of the reference signal may be a random sequence such as a longest linear shift register sequence (m sequence), a pseudo-random sequence (for example, a Gold sequence), or a random access sequence (for example, a ZC sequence). However, this embodiment of this application is not limited thereto.

According to the positioning method provided in this embodiment of this application, the sequence initialization identifier of the reference signal may be generated based on the CRC of the SCI, so that a local reference signal can be quickly generated, and positioning can be quickly implemented.

Optionally, the sequence initialization identifier of the reference signal and the CRC may satisfy the following formula:

$$N_{ID} = \sum_{i=0}^{L-1} 2^i * p_i,$$

where

$p_i$ is an $i^{th}$ bit of the CRC, $L$ is a length of the CRC, and $N_{ID}$ is the sequence initialization identifier.

The protocol may agree that the sequence initialization identifier of the reference signal and the CRC may satisfy the foregoing formula. After receiving the SCI, the second device may generate the sequence initialization identifier of the reference signal based on the CRC of the SCI according to the foregoing formula, generate the local reference signal based on the sequence initialization identifier, and then compare the local reference signal with the received reference signal.

It should be noted that the constant 2 in the foregoing formula may also be replaced with another constant. This is not limited in this embodiment of this application.

In an optional embodiment, the SCI may further include indication information of first duration, and the foregoing response message is received within the first duration.

The first duration is maximum duration in which the first device receives the response message. After obtaining the first duration by using the SCI, the second device sends the response message to the first device within the first duration. If the first duration is exceeded, the second device may not send the response message.

Optionally, the first duration may be related to a relative speed between the first device and the second device. If the relative speed between the first device and the second device is high, the first duration may be short. For example, when the relative speed between the first device and the second device is high, the first duration may be duration at a millisecond level (10 ms, 20 ms, 40 ms, or the like) or a microsecond level (10 $\mu$s, 20 $\mu$s, 40 $\mu$s, or the like). If the relative speed between the first device and the second device is low, the first duration may be long. For example, when the relative speed between the first device and the second device is low, the first duration may be at a second level (1s, 2s, 4s, or the like).

According to the positioning method provided in this embodiment of this application, the SCI includes the first duration for feeding back the response message, so that the second device feeds back the response message as soon as possible, and positioning can be quickly implemented.

In an optional embodiment, the SCI may further include time-frequency resource information of the response message.

The time-frequency resource information of the response message may also be referred to as reserved time-frequency resource information of the response message. This is not limited in this embodiment of this application.

A time-frequency resource corresponding to the time-frequency resource information of the response message is used to send the response message. The time-frequency resource information of the response message may be used to receive a response message of one second device, or may receive response messages of a plurality of second devices. This is not limited in this embodiment of this application. The time-frequency resource information of the response message may be actively sensed by the first device, or may be allocated by a network device. This is not limited in this embodiment of this application.

When sending the response message to the first device, the second device may receive a resource allocated by the network device or a resource actively sensed by the first device. This affects positioning efficiency. The SCI may include the time-frequency resource information of the response message. The second device may obtain the time-frequency resource information of the response message by using the SCI, and send the response message on the time-frequency resource corresponding to the time-frequency resource information of the response message. The first device may receive the response message on the time-frequency resource corresponding to the time-frequency resource information of the response message. This reduces a process of obtaining a resource or sensing a resource, and helps improve positioning efficiency.

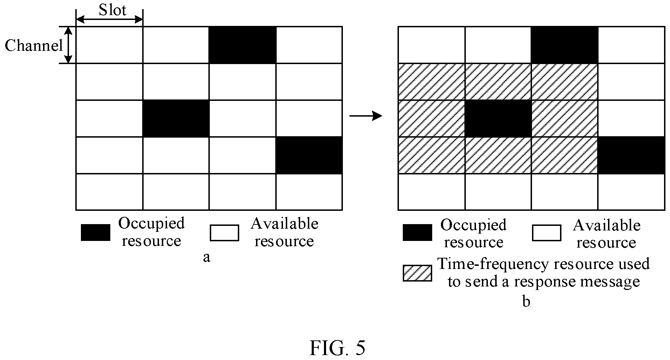

For example, FIG. 5 is a diagram of a time-frequency resource. As shown in a in FIG. 5, the resource sensed by the first device may include five channels, and each of the five channels includes four slots. Resources filled in black are occupied resources, and resources filled in white are available resources. The first device may determine, from the available resources, a time-frequency resource used to send a response message. As shown in b in FIG. 5, the first device may use resources filled with a pattern as time-frequency resources used to send the response message, and the first device may send information corresponding to the resources to the second device.

In an optional embodiment, the SCI may further include a quantity n of to-be-sent reference signals, where n is a positive integer. That the first device sends the reference signal to the second device in S302 includes: The first device sends the n reference signals to the second device. Correspondingly, the second device receives the n reference signals.

The first device may send a plurality of reference signals to the second device. When the first device sends the plurality of reference signals to the second device, the first device may indicate the quantity n of to-be-sent reference signals by using the SCI, to ensure that the second device receives the n reference signals.

The n reference signals may be sent on a same time-frequency resource, or may be sent on different time-frequency resources. This is not limited in this embodiment of this application.

The n reference signals may be periodically sent, or may be sent in a random manner. This is not limited in this embodiment of this application.

According to the positioning method provided in this embodiment of this application, the plurality of reference signals are sent. A real-time location can be obtained, improving time validity. In addition, the second device can be further prevented from missing a reference signal, improving positioning reliability.

Optionally, the SCI may further include time-frequency resource information of the n reference signals and/or a sending interval between the n reference signals.

In a possible implementation, the SCI may further include the time-frequency resource information of the n reference signals.

The SCI may include the time-frequency resource information of the n reference signals. The second device may obtain the time-frequency resource information of the n reference signals by using the SCI, and receive the reference signals on time-frequency resources corresponding to the time-frequency resource information of the n reference signals.

In this manner, the n reference signals may be sent on different time-frequency resources.

In another possible implementation, the SCI may further include the sending interval between the n reference signals.

The SCI may include the sending interval between the n reference signals. The second device may obtain the sending interval between the n reference signals by using the SCI, and may receive the reference signals at sending time.

In this manner, the n reference signals may be sent on a same time-frequency resource.

In still another possible implementation, the SCI may include the time-frequency resource information of the n reference signals and the sending interval between the n reference signals.

The second device may obtain the time-frequency resource information of the n reference signals and the sending interval between the n reference signals by using the SCI, and may receive, based on sending time, the reference signals on time-frequency resources corresponding to the time-frequency resource information of the n reference signals.

In this manner, the n reference signals may be sent on different time-frequency resources, or may be sent on a same time-frequency resource. This is not limited in this embodiment of this application.

If the method in this embodiment of this application is applied to an NR field, the SCI may include first-stage SCI and second-stage SCI. The first-stage SCI may include request information, and the second-stage SCI may include the time-frequency resource information of the reference signal.

The first device sends the SCI to the second device, and the second device may obtain the request information and the time-frequency resource information of the reference signal by using the SCI. The request information is used to request to perform positioning, or may be understood as indicating that the first device has a positioning requirement. The time-frequency resource information of the reference signal indicates a time-frequency resource for sending the reference signal.

After obtaining the request information by using the first-stage SCI, the second device may determine whether to assist the first device in completing positioning. If the second device determines that the second device can assist the first device in completing positioning, the second device may continue to receive the second-stage SCI. If the second device determines not to assist the first device in completing positioning, the second device may not receive the second-stage SCI.

Optionally, the second-stage SCI may further include at least one piece of the following information: a quantity of RBs occupied by the reference signal in frequency domain, a quantity of symbols occupied by the reference signal in time domain, or a frequency domain interval.

Optionally, the reference signal and the SCI are in a same slot, to be specific, the reference signal, the first-stage SCI, and the second-stage SCI are in a same slot.

The first-stage SCI and the second-stage SCI may be located in a same symbol in a same slot, but the first-stage SCI and the second-stage SCI occupy different bandwidths.

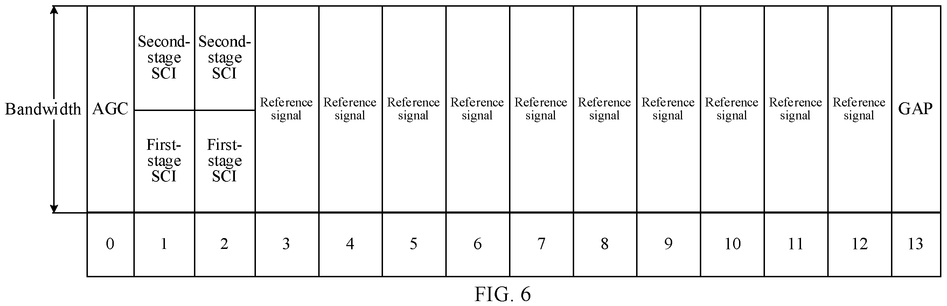

For example, FIG. 6 is a diagram of a slot. As shown in FIG. 6, the slot includes 14 symbols, and sequence numbers of the 14 symbols are respectively 0, 1, 2, 3, 4, 5, 6, 7, 8, 9, 10, 11, 12, and 13. The slot includes SCI, a reference signal, an AGC symbol, and a GAP symbol. Sequence numbers of symbols occupied by the SCI include 1 and 2. The SCI includes first-stage SCI and second-stage SCI. The first-stage SCI and the second-stage SCI occupy different bandwidths. Sequence numbers of symbols occupied by the reference signal include 3 to 12. A bandwidth of the reference signal is the same as the bandwidth of the SCI. A sequence number of a symbol occupied by the AGC symbol is 0, and a sequence number of a symbol occupied by the GAP symbol is 13. A bandwidth of the AGC symbol and a bandwidth of the GAP symbol are the same as the bandwidth of the reference signal.

It should be noted that quantities of symbols occupied by the SCI, the reference signal, the AGC symbol, and the GAP symbol, and the bandwidths occupied by the SCI, the reference signal, the AGC symbol, and the GAP symbol are merely an example. This is not limited in this embodiment of this application.

Optionally, the second-stage SCI may further include the indication information of the first duration, and the response message is received within the first duration.

Optionally, the second-stage SCI may further include the time-frequency resource information of the response message.

According to the positioning method provided in this embodiment of this application, the SCI in an existing protocol is reused to send the request message and the time-frequency resource information of the reference signal, so that a minor change is made to the protocol, and latency of a positioning process can be further shortened. This helps ensure validity and real-time performance of a positioning result.

In addition to the positioning method described above, an embodiment of this application further provides another positioning method.

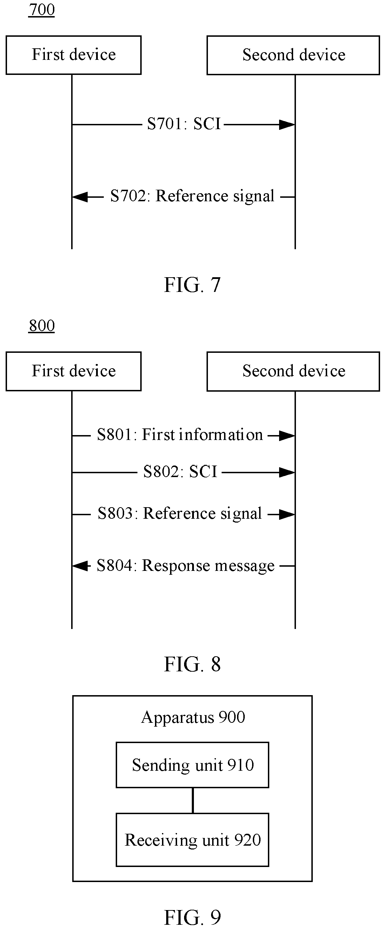

FIG. 7 is a schematic flowchart of another positioning method 700 according to an embodiment of this application. The method 700 may be applied to the scenario shown in FIG. 1. However, this embodiment of this application is not limited thereto. The method 700 may include the following steps.

S701: A first device sends SCI to a second device, where the SCI includes time-frequency resource information of a reference signal. Correspondingly, the second device receives the SCI.

For this step, refer to S301 in the foregoing method 300. Details are not described herein again.

S702: The second device sends the reference signal to the first device, where the reference signal is used for positioning. Correspondingly, the first device receives the reference signal.

The second device may send the reference signal on a time-frequency resource corresponding to the time-frequency resource information of the reference signal. After receiving the reference signal, the first device may measure the reference signal, to obtain time of arrival information, angle of arrival information, or phase of arrival information of the reference signal, and then determine location information.

According to the positioning method provided in this embodiment of this application, the first device indicates, by using the SCI, the second device to send the reference signal. The first device determines the location information by receiving the reference signal sent by the second device. This can reduce signaling overheads for feeding back a positioning result by the second device, simplify an interaction process, and help improve positioning efficiency.

It should be noted that the positioning method provided in this embodiment of this application is more suitable for a unicast scenario, that is, the first device requests the second device to perform positioning.

In an optional embodiment, the SCI further includes indication information of a sequence initialization identifier of the reference signal; or a sequence initialization identifier of the reference signal is generated based on cyclic redundancy check CRC code of the SCI.

In a possible implementation, the SCI may further include the indication information of the sequence initialization identifier of the reference signal.

The second device may obtain the indication information of the sequence initialization identifier of the reference signal by using the SCI, determine the sequence initialization identifier of the reference signal based on the indication information, and then send the reference signal to the first device based on the sequence initialization identifier of the reference signal.

In this implementation, the SCI may directly indicate the sequence initialization identifier of the reference signal, so that the second device can send the reference signal as soon as possible for positioning. This helps improve positioning efficiency.

In another possible implementation, the sequence initialization identifier of the reference signal is generated based on the CRC of the SCI.

The second device may generate the sequence initialization identifier of the reference signal by using the CRC of the SCI, and send the reference signal to the first device based on the sequence initialization identifier of the reference signal.

In this implementation, the CRC of the SCI indirectly indicates the sequence initialization identifier of the reference signal. This helps ensure transmission security.

Optionally, the sequence initialization identifier of the reference signal and the CRC may satisfy the following formula:

$$N_{ID}=\sum_{i=0}^{L-1}2^{i}*p_{i},$$

where

$p_i$ is an $i^{th}$ bit of the CRC, $L$ is a length of the CRC, and $N_{ID}$ is the sequence initialization identifier.

In an optional embodiment, the SCI further includes indication information of second duration, and the foregoing reference signal is received within the second duration.

If the SCI further includes the indication information of the second duration, the second device may obtain the second duration by using the SCI, and may send the reference signal to the first device within the second duration.

According to the positioning method provided in this embodiment of this application, the first device sends the indication information of the second duration by using the SCI, for receiving the reference signal within the second duration. This helps reduce latency of receiving the reference signal, and improve positioning efficiency.

In an optional embodiment, the SCI may further include a quantity n of to-be-sent reference signals, where n is a positive integer.

That the second device sends the reference signal to the first device in S702 includes: The second device sends the n reference signals to the first device.

According to the positioning method provided in this embodiment of this application, the first device may indicate, by using the SCI, a quantity of reference signals sent by the second device, so that the first device can receive the reference signals. This improves positioning reliability.

Optionally, the SCI further includes time-frequency resource information of the n reference signals and/or a sending interval between the n reference signals. A specific implementation is the same as that in the foregoing embodiment. Details are not described herein again.

FIG. 8 is a schematic flowchart of still another positioning method 800 according to an embodiment of this application. The method 800 may be applied to the scenario shown in FIG. 1. However, this embodiment of this application is not limited thereto. The method 800 may include the following steps.

S801: A first device sends first information to a second device, where the first information includes time-frequency resource information of a reference signal, the first information further indicates a first value, and the reference signal is used for positioning. Correspondingly, the second device receives the first information.

The first device and the second device may be different terminal devices. For example, the first device may be the vehicle 101 shown in FIG. 1, and the second device may be the vehicle 102 shown in FIG. 1.

The first value may be a positive integer or zero. The first value indicates a value that is determined by the first device and that is used to generate sequence identification code of the reference signal. When the first device sends the first information to different devices, first values indicated by the first information may be the same or may be different. This is not limited in this embodiment of this application.

If first values indicated by the first information are different when the first device sends the first information to different devices, sequence identification code of reference signals generated by the different devices are different. This helps ensure that different reference signals have good orthogonality to a maximum extent.

S802: The first device sends SCI to the second device, where the SCI indicates the first value, and CRC of the SCI and the first value are used to generate the sequence identification code of the reference signal.

The SCI may indicate the second device to prepare to receive the reference signal.

The sequence identification code of the reference signal may be used to generate sequence initialization identification code of the reference signal. The second device may obtain the sequence identification code of the reference signal based on the CRC of the SCI and the first value indicated by the first information, obtain the sequence initialization identification code of the reference signal based on the sequence identification code of the reference signal, and may perform a correlation operation on the sequence initialization identification code and the received reference signal, to obtain time of arrival information, angle of arrival information, or phase of arrival information. This helps determine location information.

A method for obtaining and generating a sequence initialization identifier of the reference signal based on the CRC of the SCI and the first value may be agreed on in a protocol.

That the first device sends the SCI to the second device may alternatively be: The first device sends a physical sidelink control channel (physical sidelink control channel, PSCCH) to the second device, where the PSCCH indicates the first value, and CRC of the PSCCH and the first value are used to generate the sequence identification code of the reference signal. It may be understood that the CRC of the PSCCH is equivalent to the CRC of the SCI.

S803: The first device sends the reference signal to the second device. Correspondingly, the second device receives the reference signal.

The first device may send the reference signal by using a time-frequency resource corresponding to the time-frequency resource information of the reference signal. Correspondingly, the second device may receive the reference signal on the time-frequency resource corresponding to the time-frequency resource information of the reference signal.

The foregoing S802 and S803 may be simultaneously performed.

S804: The second device sends a response message to the first device, where the response message includes location information determined by the second device based on the reference signal. Correspondingly, the first device receives the response message.

The second device may obtain the sequence identification code of the reference signal based on the CRC of the SCI and the first value indicated by the first information, obtain the sequence initialization identification code of the reference signal based on the sequence identification code of the reference signal, and may perform the correlation operation, for example, cross-correlation, on the sequence initialization identification code and the received reference signal, to obtain the time of arrival information, the angle of arrival information, or the phase of arrival information of the reference signal. Then, the second device determines the location information based on the time of arrival information, the angle of arrival information, or the phase of arrival information, and sends the response message to the first device, where the response message includes the location information, and the location information may be location information of the first device relative to the second device.

That the response message includes the location information determined by the second device based on the reference signal is merely an implementation. In another possible implementation, the response message may include the time of arrival information, the angle of arrival information, or the phase of arrival information of the reference signal. After receiving the time of arrival information, the angle of arrival information, or the phase of arrival information of the reference signal, the first device may determine the location information based on the time of arrival information, the angle of arrival information, or the phase of arrival information.

According to the positioning method provided in this embodiment of this application, when there is a positioning requirement, the first device may send, by using the first information, the time-frequency resource information of the reference signal for positioning, indicate the first value, and indicate the CRC by using the SCI, so that the second device can generate the sequence identification code of the reference signal based on the CRC of the SCI and the first value. The first device sends the reference signal on the time-frequency resource corresponding to the time-frequency resource information, so that the second device generates the sequence initialization identifier of the reference signal based on the sequence identification code of the reference signal, and performs the correlation operation on the sequence initialization identifier and the received reference signal, to obtain the time of arrival information, the angle of arrival information, or the phase of arrival information. This helps determine the location information. The first device feeds back the location information to the first device. There is little signaling exchange between the two devices. This greatly simplifies a positioning procedure, can improve positioning efficiency, and helps ensure validity and real-time performance of a positioning result.

The foregoing method 800 is applicable to a sidelink communication scenario. In the sidelink communication scenario, the first device and the second device may be different terminal devices. The method 800 is further applicable to a scenario in which a network device communicates with a terminal device. In the scenario in which the network device communicates with the terminal device, the first device may be the network device, and the second device may be the terminal device. In this scenario, the foregoing SCI may be replaced with downlink control information (downlink control information, DCI). In this scenario, if the terminal device (for example, a first terminal device) may communicate with another terminal device (for example, a second terminal device) in addition to the network device, the first information may be sent by the network device to the terminal device (for example, the first terminal device), and the SCI and the reference signal may be sent by the another terminal device (for example, the second terminal device) to the terminal device (for example, the first terminal device). The terminal device (for example, the first terminal device) may generate the sequence identification code of the reference signal based on the CRC of the SCI and the first value that is indicated by the network device by using the first information, determine the location information based on the sequence identification code of the reference signal and the received reference signal, and send the location information to the another terminal device (for example, the second terminal device).

In an optional embodiment, the first information may be carried in higher layer signaling, or the first device may send the first information by using higher layer signaling, or the second device may receive the first information by using higher layer signaling.

After the first device establishes a communication connection to the second device, the first device may send the first information to the second device by using the higher layer signaling. Generally, the higher layer signaling is encrypted. This can prevent other devices from maliciously tampering with the information.

For example, after the first device establishes the communication connection to the second device, the first device may send the first information by using proximity communication (proximity communication, PC5) layer signaling, radio resource control (radio resource control, RRC) layer signaling, or sidelink positioning protocol (sidelink positioning protocol, SLPP) layer signaling.

It should be noted that the higher layer signaling is generally in a unicast form, and only a target device can obtain information of the higher layer signaling. In other words, if the second device receives the first information by using the higher layer signaling, the second device may obtain the time-frequency resource information that is of the reference signal and that is included in the first information and the first value indicated by the first information. The second device may generate the sequence identification code of the reference signal based on the first value and the received CRC of the SCI, to determine subsequent location information. Another device may receive the SCI, but can only obtain the CRC of the SCI, cannot obtain the first value, cannot generate the sequence identification code of the reference signal, and cannot determine the location information. This helps avoid leakage of a location of the another device, and helps ensure device security.

In the foregoing method 800, there may be a plurality of possible implementations in which the first information indicates the first value.

In a possible implementation, the first information includes the first value. This implementation is simple and direct, and requires no additional calculation. This helps improve positioning efficiency.

If the first information includes the first value, and the first information is carried in the higher layer signaling, the first value is encrypted by using the higher layer signaling. This helps improve information security. In addition, a non-target device does not disclose the location information. This helps improve device security.

In another possible implementation, the first information may include a value list, the value list includes the first value, the SCI includes first indication information, and the first indication information indicates a sequence number of the first value in the value list.

The value list may also be referred to as a value matrix or an array. This is not limited in this embodiment of this application. The value list may include at least two values, and the at least two values may include the first value. The first device sends the at least two values by using the first information, and both the two values may be used with the CRC of the SCI to generate the sequence identification code of the reference signal. The SCI may further include the first indication information. The first indication information indicates the sequence number of the first value in the value list. In other words, the first device indicates, by using the SCI, the second device to select the first value from the value list, and to generate the sequence identification code of the reference signal by using the first value and the CRC of the SCI.

For example, the value list may include M values, where M is greater than or equal to 2. The value list may be represented as $\left\{ n_{ID,1}^{PRS}, n_{ID,2}^{PRS}, \cdots, n_{ID,M}^{PRS} \right\}$, and the first information may include the value list $\left\{ n_{ID,1}^{PRS}, n_{ID,2}^{PRS}, \cdots, n_{ID,M}^{PRS} \right\}$. The first value may be $n_{ID,2}^{PRS}$, the sequence number of the first value in the value list is 2, and the SCI may include the sequence number 2 of the first value in the value list. The second device may select, from the value list, a value $n_{ID,2}^{PRS}$ whose sequence number is 2, and generate the sequence identification code of the reference signal by using the value and the CRC of the SCI.

In this implementation, a method for indirectly indicating the first value is used, and the first value is not directly represented. This helps improve information security.

If the first information includes the value list, and the first information is carried in the higher layer signaling, the value list is encrypted by using the higher layer signaling. This helps improve information security. In addition, a non-target device does not disclose the location information. This helps improve device security.

The CRC of the SCI and the first value may be used to generate the sequence identification code of the reference signal. There may be a plurality of possible implementations of generating the sequence identification code of the reference signal based on the CRC and the first value.

In a possible implementation, the sequence identification code of the reference signal, the CRC, and the first value may satisfy the following formula:

$$n_{ID,seq}^{SL-PRS} = \left( N_{ID}^{X} + n_{ID,m}^{PRS} \right) \bmod 2^{12} \,,$$

where

$N_{ID}^{X}$ is the CRC represented in decimal notation, $n_{ID,m}^{PRS}$ is the first value, and $n_{ID,seq}^{SL-PRS}$ is the sequence identification code of the reference signal.

In another possible implementation, the sequence identification code of the reference signal, the CRC, and the first value may satisfy the following formula:

$$n_{ID,seq}^{SL-PRS} = N_{ID}^{X} + n_{ID,m}^{PRS} \,,$$

where

$N_{ID}^{X}$ is the CRC represented in decimal notation, $n_{ID,m}^{PRS}$ is the first value, and $n_{ID,seq}^{SL-PRS}$ is the sequence identification code of the reference signal.

In the foregoing two possible implementations, the second device may determine initialization identification code of the reference signal based on the sequence identification code $n_{ID,seq}^{SL-PRS}$ of the reference signal. The sequence identification code of the reference signal and the initialization identification code of the reference signal may satisfy the following formula:

$$c_{init} = \left( 2^{22} \left[ \frac{n_{ID, seq}^{SL-PRS}}{1024} \right] + 2^{10}(N_{symb}^{slot} n_{s,f}^{\mu} + l + 1)(2(n_{ID, seq}^{SL-PRS} \bmod 1024) + 1) + (n_{ID, seq}^{SL-PRS} \bmod 1024) \right) \bmod 2^{31},$$

where

$c_{init}$ is the sequence initialization identification code of the reference signal, $n_{s,f}^{\mu}$ is a sequence number of a slot in which the reference signal is, $N_{symb}^{slot}$ is a quantity of symbols included in the slot, and $l$ is a sequence number of a symbol occupied by the reference signal in the slot.

In still another possible implementation, the sequence identification code of the reference signal includes first sequence identification code and second sequence identification code, and the first sequence identification code, the second sequence identification code, the CRC, and the first value satisfy the following formulas:

$$n_{ID, seq1}^{SL-PRS} = N_{ID}^{X},$$

and

$$n_{ID, seq2}^{SL-PRS} = n_{ID, m}^{PRS},$$

where

$N_{ID}^{X}$ is the CRC represented in decimal notation, $n_{ID, m}^{PRS}$ is the first value, $n_{ID, seq1}^{SL-PRS}$ is the first sequence identification code, and $n_{ID, seq2}^{SL-PRS}$ is the second sequence identification code.

The first sequence identification code and the second sequence identification code are used to generate the sequence initialization identification code of the reference signal, and the first sequence identification code, the second sequence identification code, and the sequence initialization identification code of the reference signal satisfy the following formula:

$$c_{init} = \left( 2^{22} \left[ \frac{n_{ID, seq2}^{SL-PRS}}{1024} \right] + 2^{10}(N_{symb}^{slot} n_{s,f}^{\mu} + l + 1)(2(n_{ID, seq2}^{SL-PRS} \bmod 1024) + 1) + (n_{ID, seq1}^{SL-PRS} \bmod 1024) \right) \bmod 2^{31},$$

where

$c_{init}$ is the sequence initialization identification code of the reference signal, $n_{s,f}^{\mu}$ is a sequence number of a slot in which the reference signal is, $N_{symb}^{slot}$ is a quantity of symbols included in the slot, and $l$ is a sequence number of a symbol occupied by the reference signal in the slot.

It should be noted that, the protocol may agree that the sequence initialization identification code of the reference signal, the sequence identification code of the reference signal, the CRC, and the first value may satisfy the foregoing formula. After receiving the first information and the SCI, the second device may generate the sequence initialization identifier of the reference signal based on the CRC of the SCI and the first value according to the foregoing formula, generate a local reference signal based on the sequence initialization identifier, and then compare the local reference signal with the received reference signal, so that the local reference signal can be quickly generated, and positioning can be quickly implemented.

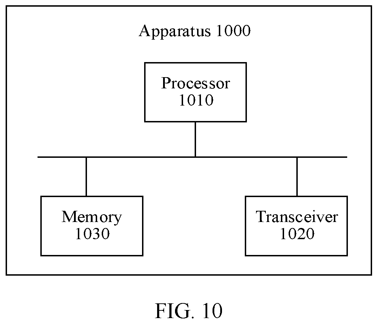

The foregoing describes in detail the positioning method in embodiments of this application with reference to FIG. 1 to FIG. 8. The following describes in detail a positioning apparatus in embodiments of this application with reference to FIG. 9 and FIG. 10.

FIG. 9 is a block diagram of a communication apparatus 900 according to an embodiment of this application. The apparatus 90 may include a sending unit 910 and a receiving unit 920. The communication apparatus 900 has a positioning function, and may also be referred to as a positioning apparatus.

In a possible implementation, the positioning apparatus 900 may perform the steps performed by the first device in the foregoing method 300.

The sending unit 910 is configured to: send sidelink control information SCI to a second device, where the SCI includes time-frequency resource information of a reference signal, and the reference signal is used for positioning; and send the reference signal to the second device. The receiving unit 920 is configured to receive a response message sent by the second device, where the response message includes location information determined by the second device based on the reference signal.

Optionally, the reference signal and the SCI are in a same slot.

Optionally, in the slot, a 1st symbol occupied by the reference signal is a symbol following a last symbol occupied by the SCI.

Optionally, a sequence initialization identifier of the reference signal is generated based on cyclic redundancy check CRC code of the SCI.

Optionally, the sequence initialization identifier of the reference signal and the CRC satisfy the following formula:

$$N_{ID} = \sum_{i=0}^{L-1} 2^i * p_i,$$

where

$p_i$ is an $i^{th}$ bit of the CRC, $L$ is a length of the CRC, and $N_{ID}$ is the sequence initialization identifier.

Optionally, the SCI further includes indication information of first duration, and the response message is received within the first duration.

Optionally, the SCI further includes the time-frequency resource information of the response message.

Optionally, the SCI further includes a quantity n of to-be-sent reference signals, where n is a positive integer. The sending unit is further configured to send the n reference signals to the second device, where the n reference signals include the reference signal.

Optionally, the SCI further includes time-frequency resource information of the n reference signals and/or a sending interval between the n reference signals.

Optionally, the SCI includes first-stage SCI and second-stage SCI, the first-stage SCI includes request information, the second-stage SCI includes the time-frequency resource information of the reference signal, and the request information is used to request to perform positioning.

In another possible implementation, the positioning apparatus 900 may perform the steps performed by the second device in the foregoing method 300.

The receiving unit 920 is configured to: receive sidelink control information SCI sent by a first device, where the SCI includes time-frequency resource information of a reference signal, and the reference signal is used for positioning; and receive the reference signal sent by the first device. The sending unit 910 is configured to send a response message to the first device, where the response message includes location information determined based on the reference signal.

Optionally, the reference signal and the SCI are in a same slot.

Optionally, in the slot, a 1st symbol occupied by the reference signal is a symbol following a last symbol occupied by the SCI.

Optionally, a sequence initialization identifier of the reference signal is generated based on cyclic redundancy check CRC code of the SCI.

Optionally, the sequence initialization identifier of the reference signal and the CRC satisfy the following formula:

$$N_{ID} = \sum_{i=0}^{L-1} 2^i * p_i,$$

where

$p_i$ is an $i^{th}$ bit of the CRC, $L$ is a length of the CRC, and $N_{ID}$ is the sequence initialization identifier.

Optionally, the SCI further includes indication information of first duration, and the response message is received within the first duration.

Optionally, the SCI further includes the time-frequency resource information of the response message.

Optionally, the SCI further includes a quantity n of to-be-sent reference signals, where n is a positive integer. The receiving unit 920 is further configured to receive the n reference signals sent by the first device, where the n reference signals include the reference signal.

Optionally, the SCI further includes time-frequency resource information of the n reference signals and/or a sending interval between the n reference signals.

Optionally, the SCI includes first-stage SCI and second-stage SCI, the first-stage SCI includes request information, the second-stage SCI includes the time-frequency resource information of the reference signal, and the request information is used to request to perform positioning.

In still another possible implementation, the positioning apparatus 900 may perform the steps performed by the first device in the foregoing method 700.

The sending unit 910 is configured to send sidelink control information SCI to a second device, where the SCI includes time-frequency resource information of a reference signal. The receiving unit 920 is configured to receive the reference signal sent by the second device, where the reference signal is used for positioning.

Optionally, the SCI further includes indication information of a sequence initialization identifier of the reference signal, or a sequence initialization identifier of the reference signal is generated based on cyclic redundancy check CRC code of the SCI.

Optionally, the SCI further includes a quantity n of to-be-sent reference signals, where n is a positive integer. The receiving unit 920 is further configured to receive the n reference signals sent by the second device, where the n reference signals include the reference signal.

In another possible implementation, the positioning apparatus 900 may perform the steps performed by the second device in the foregoing method 700.

The receiving unit 920 is configured to receive sidelink control information SCI sent by a first device, where the SCI includes time-frequency resource information of a reference signal. The sending unit 910 is configured to send the reference signal to the first device, where the reference signal is used for positioning.

Optionally, the SCI further includes indication information of a sequence initialization identifier of the reference signal, or a sequence initialization identifier of the reference signal is generated based on cyclic redundancy check CRC code of the SCI.

Optionally, the SCI further includes a quantity n of to-be-sent reference signals, where n is a positive integer. The sending unit 910 is further configured to send the n reference signals to the first device, where the n reference signals include the reference signal.

In still another possible implementation, the positioning apparatus 900 may perform the steps performed by the first device in the foregoing method 800.

The sending unit 910 is configured to: send first information to a second device, where the first information includes time-frequency resource information of a reference signal, the first information further indicates a first value, and the reference signal is used for positioning; send sidelink control information SCI to the second device, where cyclic redundancy check CRC code of the SCI and the first value are used to generate sequence identification code of the reference signal; and send the reference signal to the second device. The receiving unit is configured to receive a response message sent by the second device, where the response message includes location information determined by the second device based on the reference signal.

Optionally, the first information is sent by using higher layer signaling.

Optionally, the first information includes the first value.

Optionally, the first information includes a value list, the value list includes the first value, the SCI includes first indication information, and the first indication information indicates a sequence number of the first value in the value list.

Optionally, the sequence identification code of the reference signal, the CRC, and the first value satisfy the following formula:

$$n_{ID,\,seq}^{SL-PRS} = \left( N_{ID}^{X} + n_{ID,\,m}^{PRS} \right) \bmod 2^{12} \,,$$

where

$N_{ID}^{X}$ is the CRC represented in decimal notation, $n_{ID,\,m}^{PRS}$ is the first value, and $n_{ID,\,seq}^{SL-PRS}$ is the sequence identification code of the reference signal.

Optionally, the sequence identification code of the reference signal includes first sequence identification code and second sequence identification code, and the first sequence identification code, the second sequence identification code, the CRC, and the first value satisfy the following formulas:

$$n_{ID,\,seq1}^{SL-PRS} = N_{ID}^{X} \,,$$

and

$$n_{ID,\,seq2}^{SL-PRS} = n_{ID,\,m}^{PRS},$$

where

$N_{ID}^{X}$ is the CRC represented in decimal notation, $n_{ID,\,m}^{PRS}$ is the first value, $n_{ID,\,seq1}^{SL-PRS}$ is the first sequence identification code, and $n_{ID,\,seq2}^{SL-PRS}$ is the second sequence identification code.

Optionally, the first sequence identification code and the second sequence identification code are used to generate sequence initialization identification code of the reference signal, and the first sequence identification code, the second sequence identification code, and the sequence initialization identification code of the reference signal satisfy the following formula:

$$c_{init} = \left( 2^{22} \left\lceil \frac{n_{ID,\,seq2}^{SL-PRS}}{1024} \right\rceil + 2^{10}(N_{symb}^{slot}n_{s,\,f}^{\mu} + l + 1)(2(n_{ID,\,seq2}^{SL-PRS} \bmod 1024) + 1) + (n_{ID,\,seq1}^{SL-PRS} \bmod 1024) \right) \bmod 2^{31},$$

where

$c_{init}$ is the sequence initialization identification code of the reference signal, $n_{s,\,f}^{\mu}$ is a sequence number of a slot in which the reference signal is, $N_{symb}^{slot}$ is a quantity of symbols included in the slot, and *l* is a sequence number of a symbol occupied by the reference signal in the slot.

In another possible implementation, the positioning apparatus 900 may perform the steps performed by the second device in the foregoing method 800.

The receiving unit 920 is configured to: receive first information sent by a first device, where the first information includes time-frequency resource information of a reference signal, the first information further indicates a first value, and the reference signal is used for positioning; receive sidelink control information SCI sent by the first device, where cyclic redundancy check CRC code of the SCI and the first value are used to generate sequence identification code of the reference signal; and receive the reference signal sent by the first device. The sending unit 910 is configured to send a response message to the first device, where the response message includes location information determined based on the reference signal.

Optionally, the first information is received by using higher layer signaling.

Optionally, the first information includes the first value.

Optionally, the first information includes a value list, the value list includes the first value, the SCI includes first indication information, and the first indication information indicates a sequence number of the first value in the value list.

Optionally, the sequence identification code of the reference signal, the CRC, and the first value satisfy the following formula:

$$n_{ID,\,seq}^{SL-PRS} = \left( N_{ID}^{X} + n_{ID,\,m}^{PRS} \right) \bmod 2^{12},$$

where

$N_{ID}^{X}$ is the CRC represented in decimal notation, $n_{ID,\,m}^{PRS}$ is the first value, and $n_{ID,\,seq}^{SL-PRS}$ is the sequence identification code of the reference signal.

Optionally, the sequence identification code of the reference signal includes first sequence identification code and second sequence identification code, and the first sequence identification code, the second sequence identification code, the CRC, and the first value satisfy the following formulas:

$$n_{ID,\,seq1}^{SL-PRS} = N_{ID}^{X},$$

and

$$n_{ID,\,seq2}^{SL-PRS} = n_{ID,\,m}^{PRS},$$

where

$N_{ID}^{X}$ is the CRC represented in decimal notation, $n_{ID,m}^{PRS}$ is the first value, $n_{ID,seq1}^{SL-PRS}$ is the first sequence identification code, and $n_{ID,seq2}^{SL-PRS}$ is the second sequence identification code.

Optionally, the first sequence identification code and the second sequence identification code are used to generate sequence initialization identification code of the reference signal, and the first sequence identification code, the second sequence identification code, and the sequence initialization identification code of the reference signal satisfy the following formula:

$$c_{init} = \left( 2^{22} \left[ \frac{n_{ID,seq2}^{SL-PRS}}{1024} \right] + 2^{10} (N_{symb}^{slot} n_{s,f}^{\mu} + l + 1)(2(n_{ID,seq2}^{SL-PRS} \bmod 1024) + 1) + (n_{ID,seq1}^{SL-PRS} \bmod 1024) \right) \bmod 2^{31} ,$$

where

$c_{init}$ is the sequence initialization identification code of the reference signal, $n_{s,f}^{\mu}$ is a sequence number of a slot in which the reference signal is, $N_{symb}^{slot}$ is a quantity of symbols included in the slot, and $l$ is a sequence number of a symbol occupied by the reference signal in the slot.

It should be understood that the positioning apparatus 900 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 900 may be specifically the first device or the second device in the foregoing embodiments. The apparatus 900 may be configured to perform procedures and/or steps corresponding to the first device or the second device in the foregoing method embodiments. To avoid repetition, details are not described herein again.

The positioning apparatus 900 in the foregoing solutions has a function of implementing corresponding steps performed by the first device or the second device in the foregoing methods. The function may be implemented by hardware, or may be implemented by hardware by executing corresponding software. The hardware or the software includes one or more modules corresponding to the function.

In this embodiment of this application, the apparatus 900 in FIG. 9 may alternatively be a chip or a chip system such as a system on chip (system on chip, SoC).

FIG. 10 is a block diagram of another positioning apparatus 1000 according to an embodiment of this application. The apparatus 1000 includes a processor 1010, a transceiver 1020, and a memory 1030. The processor 1010, the transceiver 1020, and the memory 1030 communicate with each other through an internal connection path. The memory 1030 is configured to store instructions. The processor 1010 is configured to execute the instructions stored in the memory 1030, to control the transceiver 1020 to send a signal and/or receive a signal.

It should be understood that the positioning apparatus 1000 may be specifically the first device or the second device in the foregoing embodiments, and may be configured to perform steps and/or procedures corresponding to the first device or the second device in the foregoing method embodiments. Optionally, the memory 1030 may include a read-only memory and a random access memory, and provide the instructions and data for the processor. A part of the memory may further include a non-volatile random access memory. For example, the memory may further store information of a device type. The processor 1010 may be configured to execute the instructions stored in the memory. In addition, when the processor 1010 executes the instructions stored in the memory, the processor 1010 is configured to perform the steps and/or procedures corresponding to the first device or the second device in the foregoing method embodiments. The transceiver 1020 may include a transmitter and a receiver. The transmitter may be configured to implement steps and/or procedures corresponding to the transceiver and that are used to perform a sending action. The receiver may be configured to implement steps and/or procedures corresponding to the transceiver and that are used to perform a receiving action.

It should be understood that, in this embodiment of this application, the processor of the foregoing apparatus may be a central processing unit (central processing unit, CPU). Alternatively, the processor may be another general-purpose processor, a digital signal processor (DSP), an application-specific integrated circuit (ASIC), a field programmable gate array (FPGA) or another programmable logic device, a discrete gate or a transistor logic device, a discrete hardware component, or the like. The general-purpose processor may be a microprocessor, or the processor may be any conventional processor or the like.

In an implementation process, steps in the foregoing methods can be implemented by using a hardware integrated logic circuit in the processor, or by using instructions in a form of software. The steps of the methods disclosed with reference to embodiments of this application may be directly performed by a hardware processor, or may be performed by a combination of hardware and software units in the processor. The software unit may be located in a mature storage medium in the art, such as a random access memory, a flash memory, a read-only memory, a programmable read-only memory, an electrically erasable programmable memory, or a register. The storage medium is located in the memory. The processor executes the instructions in the memory and completes the steps in the foregoing methods in combination with the hardware of the processor. To avoid repetition, details are not described herein again.

An embodiment of this application further provides a communication system. The communication system may include the first device and the second device in the foregoing embodiments.

An embodiment of this application provides a readable-computer storage medium. The readable-computer storage medium is configured to store a computer program, and the computer program is used to implement the method corresponding to the first device shown in the possible implementations in the foregoing embodiments.

An embodiment of this application provides another readable-computer storage medium. The readable-computer storage medium is configured to store a computer program, and the computer program is used to implement the method corresponding to the second device shown in the possible implementations in the foregoing embodiments.

An embodiment of this application provides a computer program product. The computer program product includes a computer program (which may also be referred to as code or instructions). When the computer program is run on a computer, the computer may perform the method corresponding to the first device shown in the foregoing embodiments.

An embodiment of this application provides another computer program product. The computer program product includes a computer program (which may also be referred to as code or instructions). When the computer program is run on a computer, the computer may perform the method corresponding to the second device shown in the possible implementations in the foregoing embodiments.

An embodiment of this application provides a chip system. The chip system is configured to support the first device in implementing the function shown in embodiments of this application.

An embodiment of this application provides another chip system. The chip system is configured to support the second device in implementing the function shown in embodiments of this application.

A person of ordinary skill in the art may be aware that the units and algorithm steps described with reference to the examples in embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part making contributions, or some of the technical solutions may be implemented in a form of a software product. The computer software product is stored in a storage medium, and includes several instructions for instructing a computer device (which may be a personal computer, a server, a receive end, or the like) to perform all or some of the steps of the methods described in embodiments of this application. The foregoing storage medium includes various media that can store program code, such as a USB flash drive, a removable hard disk, a read-only memory (read-only memory, ROM), a random access memory (random access memory, RAM), a magnetic disk, or an optical disc.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner.

It should be further understood that, ordinal numbers such as "first" and "second" in embodiments of this application are used to distinguish between a plurality of objects, but are not intended to limit sizes, content, a sequence, a time sequence, priorities, importance degrees, or the like of the plurality of obj ects. For example, the first device and the second device do not indicate different sizes, priorities, importance degrees, or the like of the two devices.

It should be further understood that, in this application, both "when" and "if" mean that a network element performs corresponding processing in an objective situation, but do not constitute a limitation on time, do not require that the network element has a determining action during implementation, and do not mean another limitation either.

It should be further understood that, in this application, "at least one" means one or more, and "a plurality of" means two or more. "At least one item (piece)" or a similar expression thereof means one item (piece) or a plurality of items (pieces), that is, any combination of these items, including any combination of singular items (pieces) or plural items (pieces). For example, at least one item (piece) of a, b, or c may indicate a, b, c, a and b, a and c, b and c, or a, b, and c.

It should be further understood that a term "and/or" in this specification describes only an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B.

It should be further understood that the indication in embodiments of this application may be an explicit indication or an implicit indication. For example, if A indicates B, and C may be associated by using B, A explicitly indicates B, and A implicitly indicates C.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A positioning method, comprising:

    sending, by a first device, sidelink control information SCI to a second device, wherein the SCI comprises time-frequency resource information of a reference signal, and the reference signal is used for positioning;
    sending, by the first device, the reference signal to the second device; and
    receiving, by the first device, a response message sent by the second device, wherein the response message comprises location information determined by the second device based on the reference signal.

2. The method according to claim 1, wherein the reference signal and the SCI are in a same slot.

3. The method according to claim 2, wherein in the slot, a $1^{st}$ symbol occupied by the reference signal is a symbol following a last symbol occupied by the SCI.

4. The method according to any one of claims 1 to 3, wherein a sequence initialization identifier of the reference signal is generated based on cyclic redundancy check CRC code of the SCI.

5. The method according to claim 4, wherein the sequence initialization identifier of the reference signal and the CRC satisfy the following formula:

$$N_{ID} = \sum_{i=0}^{L-1} 2^i * p_i,$$

wherein
$p_i$ is an $i^{th}$ bit of the CRC, $L$ is a length of the CRC, and $N_{ID}$ is the sequence initialization identifier.

**6.** The method according to any one of claims 1 to 5, wherein the SCI further comprises indication information of first duration, and the response message is received within the first duration.

**7.** The method according to any one of claims 1 to 6, wherein the SCI further comprises time-frequency resource information of the response message.

**8.** The method according to any one of claims 1 to 7, wherein the SCI further comprises a quantity n of to-be-sent reference signals, and n is a positive integer; and
the sending, by the first device, the reference signal to the second device comprises:
sending, by the first device, the n reference signals to the second device, wherein the n reference signals comprise the reference signal.

**9.** The method according to claim 8, wherein the SCI further comprises time-frequency resource information of the n reference signals and/or a sending interval between the n reference signals.

**10.** The method according to any one of claims 1 to 9, wherein the SCI comprises first-stage SCI and second-stage SCI, the first-stage SCI comprises request information, the second-stage SCI comprises the time-frequency resource information of the reference signal, and the request information is used to request to perform positioning.

**11.** A positioning method, comprising:

sending, by a first device, sidelink control information SCI to a second device, wherein the SCI comprises time-frequency resource information of a reference signal; and
receiving, by the first device, the reference signal sent by the second device, wherein the reference signal is used for positioning.

**12.** The method according to claim 11, wherein the SCI further comprises indication information of a sequence initialization identifier of the reference signal; or
a sequence initialization identifier of the reference signal is generated based on cyclic redundancy check CRC code of the SCI.

**13.** The method according to claim 11 or 12, wherein the SCI further comprises a quantity n of to-be-sent reference signals, and n is a positive integer; and
the receiving, by the first device, the reference signal sent by the second device comprises:
receiving, by the first device, the n reference signals sent by the second device, wherein the n reference signals comprise the reference signal.

**14.** A positioning method, comprising:

receiving, by a second device, sidelink control information SCI sent by a first device, wherein the SCI comprises time-frequency resource information of a reference signal, and the reference signal is used for positioning;
receiving, by the second device, the reference signal sent by the first device; and
sending, by the second device, a response message to the first device, wherein the response message comprises location information determined by the second device based on the reference signal.

**15.** The method according to claim 14, wherein the reference signal and the SCI are in a same slot.

**16.** The method according to claim 15, wherein in the slot, a $1^{st}$ symbol occupied by the reference signal is a symbol following a last symbol occupied by the SCI.

**17.** The method according to any one of claims 14 to 16, wherein a sequence initialization identifier of the reference signal is generated based on cyclic redundancy check CRC code of the SCI.

**18.** The method according to claim 17, wherein the sequence initialization identifier of the reference signal and the CRC satisfy the following formula:

$$N_{ID} = \sum_{i=0}^{L-1} 2^i * p_i,$$

wherein
$p_i$ is an $i^{th}$ bit of the CRC, $L$ is a length of the CRC, and $N_{ID}$ is the sequence initialization identifier.

19. The method according to any one of claims 14 to 18, wherein the SCI further comprises indication information of first duration, and the response message is received within the first duration.

20. The method according to any one of claims 14 to 19, wherein the SCI further comprises time-frequency resource information of the response message.

21. The method according to any one of claims 14 to 20, wherein the SCI further comprises a quantity n of to-be-sent reference signals, and n is a positive integer; and
the receiving, by the second device, the reference signal sent by the first device comprises:
receiving, by the second device, the n reference signals sent by the first device, wherein the n reference signals comprise the reference signal.

22. The method according to claim 21, wherein the SCI further comprises time-frequency resource information of the n reference signals and/or a sending interval between the n reference signals.

23. The method according to any one of claims 14 to 22, wherein the SCI comprises first-stage SCI and second-stage SCI, the first-stage SCI comprises request information, the second-stage SCI comprises the time-frequency resource information of the reference signal, and the request information is used to request to perform positioning.

24. A positioning method, comprising:

receiving, by a second device, sidelink control information SCI sent by a first device, wherein the SCI comprises time-frequency resource information of a reference signal; and
sending, by the second device, the reference signal to the first device, wherein the reference signal is used for positioning.

25. The method according to claim 24, wherein the SCI further comprises indication information of a sequence initialization identifier of the reference signal; or
a sequence initialization identifier of the reference signal is generated based on cyclic redundancy check CRC code of the SCI.

26. The method according to claim 24 or 25, wherein the SCI further comprises a quantity n of to-be-sent reference signals, and n is a positive integer; and
the sending, by the second device, the reference signal to the first device comprises:
sending, by the second device, the n reference signals to the first device, wherein the n reference signals comprise the reference signal.

27. A positioning method, comprising:

sending, by a first device, first information to a second device, wherein the first information comprises time-frequency resource information of a reference signal, the first information further indicates a first value, and the reference signal is used for positioning;
sending, by the first device, sidelink control information SCI to the second device, wherein cyclic redundancy check CRC code of the SCI and the first value are used to generate sequence identification code of the reference signal;
sending, by the first device, the reference signal to the second device; and
receiving, by the first device, a response message sent by the second device, wherein the response message comprises location information determined by the second device based on the reference signal.

28. The method according to claim 27, wherein the first information is sent by using higher layer signaling.

29. The method according to claim 28, wherein the first information comprises the first value.

30. The method according to claim 28, wherein the first information comprises a value list, the value list comprises the first value, the SCI comprises first indication information, and the first indication information indicates a sequence number of the first value in the value list.

31. The method according to any one of claims 27 to 30, wherein the sequence identification code of the reference signal, the CRC, and the first value satisfy the following formula:

$$n_{ID,\,seq}^{SL-PRS} = \left( N_{ID}^{X} + n_{ID,\,m}^{PRS} \right) \mathrm{mod}2^{12} \,,$$

wherein

$N_{ID}^{X}$ is the CRC represented in decimal notation, $n_{ID,\,m}^{PRS}$ is the first value, and $n_{ID,\,seq}^{SL-PRS}$ is the sequence identification code of the reference signal.

32. The method according to any one of claims 27 to 30, wherein the sequence identification code of the reference signal comprises first sequence identification code and second sequence identification code, and the first sequence identification code, the second sequence identification code, the CRC, and the first value satisfy the following formulas:

$$n_{ID,\,seq1}^{SL-PRS} = N_{ID}^{X} \,,$$

and

$$n_{ID,\,seq2}^{SL-PRS} = n_{ID,\,m}^{PRS} \,,$$

wherein

$N_{ID}^{X}$ is the CRC represented in decimal notation, $n_{ID,\,m}^{PRS}$ is the first value, $n_{ID,\,seq1}^{SL-PRS}$ is the first sequence identification code, and $n_{ID,\,seq2}^{SL-PRS}$ is the second sequence identification code.

33. The method according to claim 32, wherein the first sequence identification code and the second sequence identification code are used to generate sequence initialization identification code of the reference signal, and the first sequence identification code, the second sequence identification code, and the sequence initialization identification code of the reference signal satisfy the following formula:

$$c_{init} = \left( 2^{22} \left\lceil \frac{n_{ID,\,seq2}^{SL-PRS}}{1024} \right\rceil + 2^{10}(N_{symb}^{slot} n_{s,\,f}^{\mu} + l + 1)(2(n_{ID,\,seq2}^{SL-PRS} \mathrm{mod}1024) + 1) + (n_{ID,\,seq1}^{SL-PRS} \mathrm{mod}1024) \right) \mathrm{mod}2^{31} \,,$$

wherein

$c_{init}$ is the sequence initialization identification code of the reference signal, $n_{s,\,f}^{\mu}$ is a sequence number of a slot in which the reference signal is, $N_{symb}^{slot}$ is a quantity of symbols comprised in the slot, and l is a sequence number of a symbol occupied by the reference signal in the slot.

34. A positioning method, comprising:

receiving, by a second device, first information sent by a first device, wherein the first information comprises time-frequency resource information of a reference signal, the first information further indicates a first value, and the reference signal is used for positioning;

receiving, by the second device, sidelink control information SCI sent by the first device, wherein cyclic redundancy check CRC code of the SCI and the first value are used to generate sequence identification code of the reference signal;

receiving, by the second device, the reference signal sent by the first device; and

sending, by the second device, a response message to the first device, wherein the response message comprises location information determined by the second device based on the reference signal.

35. The method according to claim 34, wherein the first information is received by using higher layer signaling.

36. The method according to claim 35, wherein the first information comprises the first value.

37. The method according to claim 35, wherein the first information comprises a value list, the value list comprises the first value, the SCI comprises first indication information, and the first indication information indicates a sequence number of the first value in the value list.

38. The method according to any one of claims 34 to 37, wherein the sequence identification code of the reference signal, the CRC, and the first value satisfy the following formula:

$$n_{ID,\,seq}^{SL-PRS} = \left( N_{ID}^{X} + n_{ID,\,m}^{PRS} \right) \bmod 2^{12} ,$$

wherein

$N_{ID}^{X}$ is the CRC represented in decimal notation, $n_{ID,\,m}^{PRS}$ is the first value, and $n_{ID,\,seq}^{SL-PRS}$ is the sequence identification code of the reference signal.

39. The method according to any one of claims 34 to 37, wherein the sequence identification code of the reference signal comprises first sequence identification code and second sequence identification code, and the first sequence identification code, the second sequence identification code, the CRC, and the first value satisfy the following formulas:

$$n_{ID,\,seq1}^{SL-PRS} = N_{ID}^{X} ,$$

and

$$n_{ID,\,seq2}^{SL-PRS} = n_{ID,\,m}^{PRS} ,$$

wherein

$N_{ID}^{X}$ is the CRC represented in decimal notation, $n_{ID,\,m}^{PRS}$ is the first value, $n_{ID,\,seq1}^{SL-PRS}$ is the first sequence identification code, and $n_{ID,\,seq2}^{SL-PRS}$ is the second sequence identification code.

40. The method according to claim 39, wherein the first sequence identification code and the second sequence identification code are used to generate sequence initialization identification code of the reference signal, and the first sequence identification code, the second sequence identification code, and the sequence initialization identification code of the reference signal satisfy the following formula:

$$c_{init} = \left( 2^{22} \left\lceil \frac{n_{ID,\,seq2}^{SL-PRS}}{1024} \right\rceil + 2^{10} (N_{symb}^{slot} n_{s,\,f}^{\mu} + l + 1)(2(n_{ID,\,seq2}^{SL-PRS} \bmod 1024) + 1) + (n_{ID,\,seq1}^{SL-PRS} \bmod 1024) \right) \bmod 2^{31} ,$$

wherein

$c_{init}$ is the sequence initialization identification code of the reference signal, $n_{s,f}^{\mu}$ is a sequence number of a slot in which the reference signal is, $N_{symb}^{slot}$ is a quantity of symbols comprised in the slot, and l is a sequence number of a symbol occupied by the reference signal in the slot.

41. A communication apparatus, comprising a processor and a memory, wherein the memory is configured to store a computer program or instructions, and the processor is configured to run the computer program or the instructions, to perform the method according to any one of claims 1 to 10, the method according to any one of claims 11 to 13, the method according to any one of claims 14 to 23, the method according to any one of claims 24 to 26, the method according to any one of claims 27 to 33, or the method according to any one of claims 34 to 40.

42. A computer-readable storage medium, wherein the computer-readable storage medium stores a computer program or instructions, and the computer program or the instructions are used to implement the method according to any one of claims 1 to 10, the method according to any one of claims 11 to 13, the method according to any one of claims 14 to 23, the method according to any one of claims 24 to 26, the method according to any one of claims 27 to 33, or the method according to any one of claims 34 to 40.

43. A computer program product, wherein the computer program product comprises instructions, and when the instructions are executed, the method according to any one of claims 1 to 10, the method according to any one of claims 11 to 13, the method according to any one of claims 14 to 23, the method according to any one of claims 24 to 26, the method according to any one of claims 27 to 33, or the method according to any one of claims 34 to 40 is performed.

FIG. 1

FIG. 2

300

```
┌─────────────┐              ┌─────────────┐
│ First device │              │ Second device│
└─────────────┘              └─────────────┘
```

S301: SCI ⟶

S302: Reference signal ⟶

◄ S303: Response message

## FIG. 3

| AGC | | | Reference signal | Reference signal | Reference signal | Reference signal | Reference signal | Reference signal | Reference signal | Reference signal | Reference signal | Reference signal | GAP |
|---|---|---|---|---|---|---|---|---|---|---|---|---|---|
| | SCI | SCI | | | | | | | | | | | |
| 0 | 1 | 2 | 3 | 4 | 5 | 6 | 7 | 8 | 9 | 10 | 11 | 12 | 13 |

Bandwidth

FIG. 4

FIG. 5

| Bandwidth | AGC | Second-stage SCI / First-stage SCI | Second-stage SCI / First-stage SCI | Reference signal | Reference signal | Reference signal | Reference signal | Reference signal | Reference signal | Reference signal | Reference signal | Reference signal | Reference signal | GAP |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |

FIG. 6

EP 4 510 636 A1

700

| First device | | Second device |

S701: SCI →

← S702: Reference signal

FIG. 7

800

| First device | | Second device |

⊢ S801: First information →

S802: SCI →

⊢ S803: Reference signal →

◄ S804: Response message ⊣

FIG. 8

Apparatus 900

Sending unit 910

Receiving unit 920

FIG. 9

Apparatus 1000

Processor
1010

Memory
1030

Transceiver
1020

FIG. 10

## INTERNATIONAL SEARCH REPORT

| International application No. |
| --- |
| **PCT/CN2023/089911** |

**A. CLASSIFICATION OF SUBJECT MATTER**

H04W 4/02(2018.01)i

According to International Patent Classification (IPC) or to both national classification and IPC

**B. FIELDS SEARCHED**

Minimum documentation searched (classification system followed by classification symbols)

IPC:H04W H04L H04Q

Documentation searched other than minimum documentation to the extent that such documents are included in the fields searched

Electronic data base consulted during the international search (name of data base and, where practicable, search terms used)

CNTXT, ENTXTC, WPABS, WPABSC, 3GPP, CJFD: 侧链, 侧行, 参考信号, 定位, 位置, 控制信息, 序列, sidelink, direct link, reference signal, location, position, control signal, sequence

**C. DOCUMENTS CONSIDERED TO BE RELEVANT**

| Category* | Citation of document, with indication, where appropriate, of the relevant passages | Relevant to claim No. |
| --- | --- | --- |
| Y | CN 112583553 A (DATANG MOBILE COMMUNICATIONS EQUIPMENT CO., LTD.) 30 March 2021 (2021-03-30) <br> description, paragraphs [0046]-[0252] | 1-43 |
| Y | CN 112789915 A (OPPO GUANGDONG MOBILE TELECOMMUNICATIONS CO., LTD.) 11 May 2021 (2021-05-11) <br> claims 1-7 | 1-43 |
| Y | WO 2022068836 A1 (SPREADTRUM COMMUNICATIONS (SHANGHAI) CO., LTD.) 07 April 2022 (2022-04-07) <br> claims 1-7 | 27-43 |
| A | CN 113950068 A (HUAWEI TECHNOLOGIES CO., LTD.) 18 January 2022 (2022-01-18) <br> entire document | 1-43 |

☐ Further documents are listed in the continuation of Box C.   ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **05 June 2023** | **21 June 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/089911**

| Patent document cited in search report | | | Publication date (day/month/year) | Patent family member(s) | | | Publication date (day/month/year) |
|---|---|---|---|---|---|---|---|
| CN | 112583553 | A | 30 March 2021 | WO | 2021057232 | A1 | 01 April 2021 |
| | | | | CN | 112583553 | B | 08 February 2022 |
| | | | | EP | 4037226 | A1 | 03 August 2022 |
| | | | | EP | 4037226 | A4 | 23 November 2022 |
| | | | | US | 2022321294 | A1 | 06 October 2022 |
| CN | 112789915 | A | 11 May 2021 | WO | 2020143059 | A1 | 16 July 2020 |
| | | | | CN | 113286371 | A | 20 August 2021 |
| | | | | BR | 112021013405 | A2 | 14 September 2021 |
| | | | | KR | 20210119402 | A | 05 October 2021 |
| | | | | EP | 3890415 | A1 | 06 October 2021 |
| | | | | US | 2021329603 | A1 | 21 October 2021 |
| | | | | VN | 81897 | A | 25 November 2021 |
| | | | | JP | 2022515415 | W | 18 February 2022 |
| | | | | IN | 202127033536 | A | 08 April 2022 |
| WO | 2022068836 | A1 | 07 April 2022 | CN | 114339987 | A | 12 April 2022 |
| CN | 113950068 | A | 18 January 2022 | WO | 2022012549 | A1 | 20 January 2022 |

Form PCT/ISA/210 (patent family annex) (July 2022)

**REFERENCES CITED IN THE DESCRIPTION**

**Patent documents cited in the description**

- CN 202210450673
- CN 202310145060